# NEUE EUROPÄISCHE PATENTSCHRIFT

(11) **EP 3 746 262 B2**
(45) Veröffentlichungstag und Bekanntmachung des Hinweises auf die Entscheidung über den Einspruch: **09.12.2026**
(45) Hinweis auf die Patenterteilung: 30.06.2021
(21) Anmeldenummer: 19762935.5
(22) Anmeldetag: 30.08.2019
(51) Int. Cl.: B23Q 7/14

(54) **SYSTEM UMFASSEND EINE TRANSPORTEINRICHTUNG ZUM TRANSPORTIEREN EINER ODER MEHRERER HANDHABUNGSEINRICHTUNGEN**
SYSTEM COMPRISING A TRANSPORT DEVICE FOR TRANSPORTING ONE OR MORE HANDLING DEVICES
SYTÈME COMPRENANT UN DISPOSITIF DE TRANSPORT DESTINÉ À TRANSPORTER UN OU PLUSIEURS DISPOSITIFS DE MANUTENTION

(30) Priorität: 30.08.2018 DE 102018214794; 18.01.2019 DE 102019200663
(43) Veröffentlichungstag der Anmeldung: 09.12.2020
(73) Patentinhaber: DMG MORI Pfronten GmbH, 87459 Pfronten (DE)
(72) Erfinder: Geißler, Alfred, 87459 Pfronten (DE); Trenkle, Michael, 87459 Pfronten (DE); Riedel, Sebastian, 87637 Eisenberg (DE)
(74) Vertreter: MERH-IP Matias Erny Reichl Hoffmann Patentanwälte PartG mbB
(86) Internationale Anmeldenummer: PCT/EP2019/073280
(87) Internationale Veröffentlichungsnummer: WO 2020/043912

(56) Entgegenhaltungen:
- EP-A1- 1 693 149
- EP-A1- 2 987 761
- EP-A2- 2 019 014
- WO-A1-2007/059845
- WO-A1-2018/092222
- DE-A1- 10 317 349
- DE-A1- 19 654 536
- DE-A1- 3 026 945
- DE-A1- 3 219 459
- DE-A1- 3 614 165
- JP-A- H01 257 543
- STIERLE H: "FAHRERLOSE TRANSPORTFAHRZEUGE OHNE LEITLINIEN - EINE NEUE DIMENSION IM MATERIALFLUSS", ZWF ZEITSCHRIFT FUR WIRTSCHAFTLICHE FERTIGUNG UNDAUTOMATISIERUNG, CARL HANSER VERLAG. MUNCHEN, DE, vol. 86, no. 12, 1 December 1991 (1991-12-01), pages 632 - 636, XP000258378, ISSN: 0947-0085
- EGGE H: "FAHRERLOSE TRANSPORTSYSTEME - EINE LOESUNG FUER VIELE MATERIALFLUSSPROBLEME", ZWF ZEITSCHRIFT FUR WIRTSCHAFTLICHE FERTIGUNG UNDAUTOMATISIERUNG, CARL HANSER VERLAG. MUNCHEN, DE, vol. 86, no. 10, 1 October 1991 (1991-10-01), pages 517 - 520, XP000231030, ISSN: 0947-0085

## Beschreibung

### TECHNISCHES GEBIET

Die vorliegende Erfindung betrifft ein System mit einer Transporteinrichtung und einer zentralen Steuereinrichtung, wobei die Transporteinrichtung ein fahrerloses Transportfahrzeug zum Transportieren einer oder mehrerer Handhabungseinrichtungen zur Handhabung einer Palette und/oder eines Werkstücks an einer Werkzeugmaschine umfasst.

### HINTERGRUND DER ERFINDUNG

Transportfahrzeuge zum Aufnehmen und Transportieren von Gütern innerhalb einer Werkhalle sind bekannt. Hierbei sind der Gabelstapler und der zum Teil motorisierte Hubwagen die bekanntesten Beispiele. Dabei ist es ein erklärtes Ziel bei solchen Zulieferungen durch entsprechende Fahrzeuge, den Automatisierungsgrad immer weiter zu erhöhen und bevorzugt die Zulieferungen mit den Produktionsprozessen zu synchronisieren.

Hierfür werden bevorzugt fahrerlose Transportsysteme, kurz FTS, eingesetzt, welche neben fahrerlosen Transportfahrzeugen, kurz FTF, auch festgelegte Plätze zum Aufnehmen oder Ablegen von Transportgut durch die Transportfahrzeuge aufweisen, gegebenenfalls auch spezifisch eingerichtete Plätze oder Haltepunkte, um zum Beispiel das Transportgut für den bevorstehenden Fertigungsprozess vorzubereiten.

Nachteilig erweisen sich hierbei jedoch FTS, bei denen die Transportfahrzeuge durch ein Schienensystem zu den jeweiligen Stationen geführt werden. Nicht nur, dass ein solches Schienensystem sehr aufwendig ist im Hinblick auf Fertigung, Aufbau sowie Ausrichtung der Schienen und Schienensegmente zueinander. Es ist auch immer nur für den einen konkreten Fall konzipiert und kann daher nicht kurzfristig auf Änderungen der Positionen der Plätze oder des Produktionsablaufes reagieren bzw. angepasst werden.

In der Veröffentlichung von Breuer, H.J. : "Montage, Handhabung, Materialflusstechnik auf der Hannover Messe Industrie '91", Werkstatt und Betrieb, Bd. 124, Nr. 8, S. 635-639, Hanser Verlag, 1991, ist ein solches fahrerloses, entlang einer Induktionsschleife geführtes Transportsystem (FTS) mit einem Werkstückträger gezeigt.

Derartige Systeme sind immens nachteilig im Hinblick auf Flexibilität.

Weiterhin bieten die derzeit bekannten FTS den Nachteil, dass die FTF in der Regel der Fälle nur mit einer Schnittstelle zum Aufnehmen von Transportgut oder entsprechenden technischen Vorrichtungen etc. ausgerüstet sind, sodass diese Fahrzeuge häufig lange Wege zurück legen müssen, um eine Vielzahl an Behältern ihren entsprechenden Bestimmungsort zuzuführen bzw. um die entsprechenden technischen Vorrichtungen an ihren Einsatzort zu bringen.

### ZUSAMMENFASSUNG DER ERFINDUNG

Eine Aufgabe der vorliegenden Erfindung ist es daher, eine Möglichkeit zur Verbesserung der Flexibilität in Produktions- und Fertigungsabläufen und zur Erhöhung der Fertigungseffizienz bereitzustellen.

Diese Aufgabe wird durch das System nach Anspruch 1 gelöst. Die abhängigen Ansprüche beziehen sich dabei auf vorteilhafte Ausführungsbeispiele des erfindungsgemäßen Systems.

Das erfindungsgemäße System umfasst zumindest eine Transporteinrichtung und eine zentrale Steuereinrichtung. Die zumindest eine Transporteinrichtung umfasst ein fahrerloses Transportfahrzeug zum Transportieren einer oder mehrerer Handhabungseinrichtungen, die jeweils zur Handhabung einer Palette und/oder eines Werkstücks an einer zur spanenden Bearbeitung des Werkstücks eingerichteten, auf einer Grundfläche aufgestellten Werkzeugmaschine eingerichtet sind, wobei das fahrerlose Transportfahrzeug zum Positionieren der einen oder mehreren Handhabungseinrichtungen relativ zu der Werkzeugmaschine auf der Grundfläche verfahrbar ist, insbesondere innerhalb eines Bereiches vor und/oder neben der Werkzeugmaschine und/oder vor und/oder neben einem Arbeitsraum der Werkzeugmaschine. Das fahrerlose Transportfahrzeug ist dabei dazu eingerichtet, unabhängig von einer Art Schienensystem oder dergleichen zur Führung des Transportfahrzeugs frei auf einer Ebene verfahren zu werden. Die Transporteinrichtung umfasst als Handhabungseinrichtung einen an das fahrerlose Transportfahrzeug über eine Aufnahmevorrichtung angekoppelten Palettenwechsler, der dazu eingerichtet ist, Paletten zur Aufnahme eines Werkstücks in den Arbeitsraum und an einem Rüstplatz der Werkzeugmaschine ein- und auszuwechseln, nachdem das fahrerlose Transportfahrzeug mit dem angekoppelten Palettenwechsler verfahren und innerhalb eines Bereiches vor und/oder neben dem Arbeitsraum der Werkzeugmaschine positioniert wurde. Die Transporteinrichtung ist eingerichtet, mit der zentralen Steuereinrichtung zu kommunizieren und ist durch diese steuerbar. Die Aufnahmevorrichtung weist ferner Anschlusselemente auf, die für eine Übertragung von Steuerungssignalen und Energie an den Palettenwechsler eingerichtet sind. Der Palettenwechsler ist über die Anschlusselemente durch die zentrale Steuereinrichtung steuerbar und die zentrale Steuereinrichtung ist eingerichtet ist, den Palettenwechsler der zumindest einen Transporteinrichtung zu steuern.

Durch die Transporteinrichtung können nun in besonders vorteilhafter Weise verschiedenste Handling-Prozesse von Paletten bzw. Werkstücken durchgeführt werden, sodass ein reibungsloser und insbesondere effizienter Ablauf in der Produktionskette erfolgen kann.

Insbesondere kann durch die Ausgestaltung der n Transporteinrichtung eine individuelle und freie Positionierung der Transporteinrichtung vor der Werkzeugmaschine bzw. vor dem Arbeitsraum der Werkzeugmaschine vorteilhaft erfolgen, ohne dabei auf eine Art Schienensystem oder dergleichen angewiesen zu sein.

Durch das fahrerlose Transportfahrzeug der Transporteinrichtung kann insbesondere vorteilhaft ermöglicht werden, den Automatisierungsgrad der gesamten Fertigung um ein Vielfaches zu steigern, da die Koordinierung und allgemein die Steuerung der fahrerlosen Transportfahrzeuge bzw. Transporteinrichtungen beispielsweise durch eine zentrale Rechner-/Steuereinrichtung übernommen werden kann, sodass hier ein Werker vorrangig eine überwachende Funktion einnehmen kann.

Die Transporteinrichtung kann dabei mittels Verfahren auf der Grundfläche dazu eingerichtet sein, die eine oder mehreren Handhabungseinrichtungen innerhalb eines Bereiches vor und/oder neben dem Arbeitsraum der Werkzeugmaschine entlang den Bereich aufspannenden Raumrichtungen zu positionieren.

Hierdurch können überaus flexibel diverse Handhabungseinrichtungen von der Transporteinrichtung aufgenommen, transportiert und zu ihrem Bestimmungsort gebracht werden.

Zudem können durch die Transporteinrichtung diverse Liefer- und Abholtätigkeiten von Paletten und/oder Werkstücken an einer oder mehreren Werkzeugmaschinen verrichtet werden, um die Effizienz der Fertigung weiter zu erhöhen.

Die Transporteinrichtung kann dadurch vorteilhaft weitergebildet werden, dass die Aufnahmevorrichtungen eine Zentriervorrichtung aufweist, die dazu eingerichtet ist, die jeweils aufgenommenen Handhabungseinrichtung gegenüber der Aufnahmevorrichtung auszurichten.

Hierdurch kann bereits eine Positionierungsungenauigkeit der Handhabungseinrichtung (oder einer anderen Einrichtung wie Palettenhalter, Materialboxen, etc.) gegenüber der Werkzeugmaschine oder einer anderen Einrichtung (wie Rüstplatz, Ablageplatz, Magazinplatz usw.) bei einem Absetzen/Andocken der Handhabungseinrichtung an der Werkzeugmaschine ausgeglichen werden.

Durch die Zentriervorrichtung kann die Transporteinrichtung die relative Lage der aufgenommenen Handhabungseinrichtung gegenüber sich selbst korrigieren und so lediglich eine Positionierungenauigkeit der Handhabungseinrichtung gegenüber der Werkzeugmaschine erreichen, die im Wesentlichen nur noch auf die Positionierungenauigkeit der Transporteinrichtung zurückzuführen ist.

Die Transporteinrichtung kann dadurch vorteilhaft weitergebildet werden, dass die mindestens eine der einen oder mehreren Aufnahmevorrichtungen, die eine Zentriervorrichtung aufweist, ferner einen Antrieb zur linearen Verschiebung der Aufnahmevorrichtung in Richtung der Zentriervorrichtung aufweist.

Für die Ausrichtung/Zentrierung der aufgenommenen Handhabungseinrichtung gegenüber der Transporteinrichtung kann es ferner vorteilhaft sein, wenn ein zusätzlicher Antrieb vorhanden ist, der die Aufnahmevorrichtung in Richtung der Zentriervorrichtung verfahren kann (oder in entgegengesetzter Richtung), um die aufgenommene Handhabungseinrichtung der Zentriervorrichtung zuzuführen und so die Zentrierung/Ausrichtung zu unterstützen.

Die Transporteinrichtung kann dadurch vorteilhaft weitergebildet werden, dass zumindest einer Seite der Transporteinrichtung die Aufnahmevorrichtung vorgesehen ist, wobei vorzugsweise an zwei Seiten der Transporteinrichtung mindestens eine Aufnahmevorrichtung vorgesehen ist, wobei insbesondere bevorzugt an jeder Seite der Transporteinrichtung mindestens eine Aufnahmevorrichtung vorgesehen ist.

Hierdurch kann nun die Transporteinrichtung zusätzlich eine Vielzahl an Modulen/Moduleinheiten aufnehmen, um die Fertigungsprozesse an den Werkzeugmaschinen zu unterstützen. Zudem können hierdurch verschiedenste Module miteinander kombiniert werden und zu der jeweiligen Werkzeugmaschine bzw. zu den jeweiligen Werkzeugmaschinen transportiert werden.

Die Transporteinrichtung kann dadurch vorteilhaft weitergebildet werden, dass die Anschlusselemente bei der Aufnahme der Handhabungseinrichtung eine Verbindung mit der Handhabungseinrichtung zur Übertragung von elektrischen, pneumatischen und/oder hydraulischen Steuerungssignalen und/oder Energie automatisch herstellen.

Hierdurch können nun mit einem hohen Automatisierungsgrad verschiedene Moduleinheiten von der Transporteinrichtung selbständig aufgenommen und wieder abgesetzt werden.

Die Transporteinrichtung kann dadurch vorteilhaft weitergebildet werden, dass die Aufnahmevorrichtungen jeweils eine Kontrollvorrichtung zum Überwachen des Zustands der Aufnahme der jeweiligen Handhabungseinrichtung aufweisen.

Hierdurch kann Sicherheit über die ordnungsgemäße Aufnahme durch die Transporteinrichtung gewährleistet werden.

Zudem kann die Transporteinrichtung dadurch vorteilhaft weitergebildet werden, dass die Kontrollvorrichtung dazu eingerichtet ist, die Steuerungssignale, die Energieübertragung, und/oder einen Arretierzustand der an der jeweiligen Aufnahmevorrichtung aufgenommenen Handhabungseinrichtung zu überwachen.

Auch die Signale und die Energieübertragung können hierdurch überwacht werden. Bei einer auftretenden Störung kann beispielsweise die betreffende Transporteinrichtung zur Kontrolle in eine Wartungsposition fahren und entsprechend das Problem lokalisiert werden.

Die Transporteinrichtung kann dadurch vorteilhaft weitergebildet werden, dass weitere Aufnahmevorrichtungen der Transporteinrichtung zur Aufnahme von Materialträgern, insbesondere Gitterboxen mit Rohteilen und/oder Fertigteilen eingerichtet sind.

Zudem kann die Transporteinrichtung dadurch vorteilhaft weitergebildet werden, dass weitere Aufnahmevorrichtungen der Transporteinrichtung zur Aufnahme eines Wechselgreifers zum Werkstück- und/oder Werkzeugwechsel an der Werkzeugmaschine eingerichtet sind.

Zudem kann die Transporteinrichtung dadurch vorteilhaft weitergebildet werden, dass weitere Aufnahmevorrichtungen der Transporteinrichtung zur Aufnahme eines Palettenhalters eingerichtet sind.

Neben Handling-Modulen, wie einem dem Palettenwechsler, können vorteilhaft ebenfalls Materialträger, insbesondere Gitterboxen mit Rohteilen und/oder Fertigteilen, Wechselgreifer zum Werkstück- und/oder Werkzeugwechsel an der Werkzeugmaschine sowie Palettenhalter zum Transportieren/Lagern einer Palette von der Transporteinrichtung aufgenommen werden. Dies erhöht zusätzlich die Flexibilität der Produktions-/Fertigungsabläufe.

Die Transporteinrichtung kann vorteilhaft weitergebildet werden durch: einen Antrieb zum Verfahren des Transportfahrzeugs, und eine Steuereinheit zum Steuern der Transporteinrichtung.

Die Transporteinrichtung dadurch vorteilhaft weitergebildet werden, dass der Palettenwechsler zur Aufnahme der Palette einen Greifer, eine Aufnahmeklaue und/oder eine gabelförmige Aufnahme aufweist.

Dabei ist die hier genannte Aufzählung nicht als abschließend zu verstehen, sondern kann um weitere Ausgestaltungsmöglichkeiten des Palettenwechslers ergänzt werden.

Weiterhin kann die Transporteinrichtung dadurch vorteilhaft weitergebildet werden, dass zumindest die Handhabungseinrichtung, der Materialträger, der Wechselgreifer und/oder der Palettenhalter dazu eingerichtet sind, von der Transporteinrichtung an einer für die Aufnahme der Handhabungseinrichtung, des Materialträgers, des Wechselgreifers und/oder des Palettenhalters eingerichteten Aufnahme der Werkzeugmaschine abgesetzt und/oder angedockt zu werden.

Dabei fungiert die Transporteinrichtung als Zuliefereinheit für die Werkzeugmaschine, in dem sie verschiedenste Module/Vorrichtungen an die Werkzeugmaschine bringt und sie dort absetzt (beispielsweise auf eine dafür eingerichtete Aufnahme) oder sie dort andockt (ebenfalls an einer dafür eingerichteten Aufnahme). Dabei können die Aufnahmen konenförmige Aufnahmen aufweisen, die beispielsweise zudem über Anschlussmöglichkeiten für Energie und/oder Signale verfügen. Durchaus können bei den Konen auch Anschlüsse für Fluide (wie Kühl-Schmierstoffe) vorgesehen sein.

Weiterhin kann die Transporteinrichtung vorteilhaft dadurch weitergebildet werden, dass mehrere Aufnahmevorrichtungen der Transporteinrichtung einheitlich ausgebildet sind.

Hierdurch können an den einheitlich ausgebildeten Aufnahmevorrichtungen verschiedenste Module/Moduleinheiten aufgenommen werden. Insbesondere bietet sich eine derartige "Standardisierung" der Aufnahmevorrichtungen an, um zwischen den einzelnen Modulen für die Aufnahmevorrichtung beliebig hin- und herwechseln zu können, so dass auch nicht nur eine Aufnahmevorrichtung für ein Modul geeignet ist.

Weiterhin kann die Transporteinrichtung dadurch vorteilhaft weitergebildet werden, dass die Transporteinrichtung dazu eingerichtet ist, mindestens eine/n der einen oder mehreren Handhabungseinrichtungen, der Materialträger, der Wechselgreifer und/oder der Palettenhalter von der Werkzeugmaschine aufzunehmen und zu einem Ablageplatz zu transportieren und/oder an dem Ablageplatz aufzunehmen und von dem Ablageplatz zur Werkzeugmaschine zu transportieren.

Hierdurch kann in besonders vorteilhafter Weise die Transporteinrichtung als Zubringer-Fahrzeug dienen, um die Werkzeugmaschinen mit benötigten Palettenwechsler als Handhabungseinrichtungen zu versorgen und diese dort auch abzustellen, um andere Aufgaben wieder zu übernehmen.

Weiterhin kann die die Transporteinrichtung dadurch vorteilhaft weitergebildet werden, dass die Transporteinrichtung dazu eingerichtet ist, eine oder mehrere Handhabungseinrichtungen, einen Materialträger, einen Wechselgreifer und/oder einen Palettenhalter an der Werkzeugmaschine abzusetzen und/oder anzudocken.

Hierdurch kann die Transporteinrichtung die benötigten Handhabungseinrichtungen, Materialträger, Wechselgreifer und/oder Palettenhalter an die jeweilige Werkzeugmaschine liefern, sie dort absetzen, und eine weitere Aufgabe übernehmen, anstatt vor der Werkzeugmaschine warten zu müssen, bis die Handhabungseinrichtung (oder eine andere Einrichtung) die Tätigkeit an der Werkzeugmaschine verrichtet hat. Eine deutlich effizientere Auslastung der Transporteinrichtung/en ist dadurch möglich.

Weiterhin kann die Transporteinrichtung dadurch vorteilhaft weitergebildet werden, dass die Transporteinrichtung dazu eingerichtet ist, bei Aufnehmen der Handhabungseinrichtung, des Materialträgers, des Wechselgreifers und/oder des Palettenhalters eine Verbindung zwischen einem oder mehreren Anschlusselementen der Transporteinrichtung und einem oder mehreren Anschlusselementen der Handhabungseinrichtung, des Materialträgers, des Wechselgreifers und/oder des Palettenhalters herzustellen, insbesondere zum Übertragen von Steuerungssignalen und/oder Energie von der Transporteinrichtung zur Handhabungseinrichtung, zum Materialträger, zum Wechselgreifers und/oder zum Palettenhalter.

Hierdurch kann zusätzlich der Automatisierungsgrad erhöht werden, da eine selbständige Verbindung zwischen Transporteinrichtung und Modul/Moduleinheit durch die Transporteinrichtung hergestellt werden kann.

Weiterhin kann die Transporteinrichtung dadurch vorteilhaft weitergebildet werden, dass die Transporteinrichtung dazu eingerichtet ist, bei Absetzen der Handhabungseinrichtung, des Materialträgers, des Wechselgreifers und/oder des Palettenhalters an der Werkzeugmaschine eine Verbindung zwischen einem oder mehreren Anschlusselementen der Werkzeugmaschine und einem oder mehreren Anschlusselementen der Handhabungseinrichtung, des Materialträgers, des Wechselgreifers und/oder des Palettenhalters herzustellen, insbesondere zum Übertragen von Steuerungssignalen und/oder Energie von der Werkzeugmaschine zur Handhabungseinrichtung, zum Materialträger, zum Wechselgreifer und/oder zum Palettenhalter.

Hierdurch kann in vorteilhafter Weise eine direkte Kommunikation zwischen der abgesetzten Handhabungseinrichtung, des Materialträgers, des Wechselgreifers und/oder des Palettenhalters und der Werkzeugmaschine stattfinden und die Werkzeugmaschine bei Bedarf die Handhabungseinrichtung, den Materialträger, den Wechselgreifer und/oder den Palettenhalter direkt ansteuern.

Weiterhin kann die Transporteinrichtung dadurch vorteilhaft weitergebildet werden, dass die Transporteinrichtung dazu eingerichtet ist, bei Absetzen der Handhabungseinrichtung, des Materialträgers, des Wechselgreifers und/oder des Palettenhalters an der Werkzeugmaschine eine Verbindung zur Übertragung von Steuerungssignalen und/oder Energie von der Transporteinrichtung zur Handhabungseinrichtung, zum Materialträger, zum Wechselgreifer und/oder zum Palettenhalter zu trennen.

Hierdurch wird ermöglicht, dass die Transporteinrichtung die Handhabungseinrichtung (oder eine andere Einrichtung) absetzen und sich von dieser lösen kann, damit die Handhabungseinrichtung als eine Art "stand alone"-Einrichtung ohne Hilfe der Transporteinrichtung vor der Werkzeugmaschine seine Aufgabe erfüllen kann.

Durch die Transporteinrichtung kann der Produktions- und Bearbeitungsprozess von Werkstücken deutlich flexibler gestaltet werden. Zudem kann die Transporteinrichtung sowohl bei bereits bestehenden Fertigungsstrukturen angewendet werden, als auch für völlig neue Abläufe bei der Fertigung und Bearbeitung von Werkstücken verwendet werden.

Zudem bietet die Transporteinrichtung den deutlichen Vorteil, durch ihre flexiblen Einsatzmöglichkeiten auf keine Aufgaben innerhalb der Produktionskette / innerhalb des Produktionsprozesses beschränkt zu sein.

Zudem sollen im Folgenden Beispiele einer Transporteinrichtung, einer Werkzeugmaschine und eines Verfahrens zur Handhabung von einer Palette oder eines Werkstücks und ihre jeweiligen Vorteile beschrieben werden.

Eine beispielhafte Transporteinrichtung zum Transportieren einer Handhabungseinrichtung zur Handhabung einer Palette und/oder eines Werkstücks an eine Werkzeugmaschine zur spanenden Bearbeitung des Werkstücks, wobei die Werkzeugmaschine eine Arbeitsspindel zum Aufnehmen eines Werkzeugs oder des Werkstücks und eine Palette zum Aufnehmen des Werkzeugs oder des Werkstücks aufweist, ist ferner dazu eingerichtet, die Handhabungseinrichtung innerhalb eines Bereiches vor einem Arbeitsraum der Werkzeugmaschine entlang der den Bereich aufspannenden Raumrichtungen zu positionieren. Die beispielhafte Transporteinrichtung umfasst dabei ein fahrerloses Transportfahrzeug mit einer Plattform, die mehrere Aufnahmevorrichtungen zum Aufnehmen von Handhabungseinrichtungen, einem Antrieb zum Bewegen der Plattform und einer Steuereinheit zum Steuern der Aufnahmevorrichtungen und des Antriebs der Plattform aufweist. Die Handhabungseinrichtung der beispielhaften Transporteinrichtung ist ein Palettenwechsler zum Ein- und Auswechseln der Palette in der Werkzeugmaschine ist und der Palettenwechsler ist für das Ein- und Auswechseln der Palette im Arbeitsraum und/oder auf einem Rüstplatz der Werkzeugmaschine eingerichtet.

Durch die beispielhafte Transporteinrichtung ist es nun möglich, gänzlich auf Schienensysteme zur Führung der Transportfahrzeuge zu verzichten, da die Transportfahrzeuge sich frei auf einer Ebene wie dem Hallenboden bewegen können.

Zusätzlich können hierdurch die Fahrzeuge und ihre "Fahrbahnen" individuell an die Gegebenheiten angepasst werden und ermöglichen so eine deutliche Steigerung der Flexibilität in Produktion und Logistik.

Um den Automatisierungsgrad zu erhöhen, kann die beispielhafte Transporteinrichtung als fahrerloses Transportfahrzeug mit entsprechender Steuerung und Vernetzung ausgebildet sein, sodass auch mehrere Transportfahrzeuge / Transporteinrichtungen aufeinander abgestimmt bewegt werden können.

Da die Handhabungseinrichtung, die durch die Transporteinrichtung transportiert wird, ein Palettenwechsler ist, können verschiedene Paletten mit nur einem Palettenwechsler und einer Transporteinrichtung zu den einzelnen Werkzeugmaschinen transportiert und eingelegt bzw. ausgetauscht werden.

Weiterhin verfügt die beispielhafte Transporteinrichtung über eine Vielzahl an Schnittstellen, an denen verschiedenste Handhabungseinrichtungen, wie der Palettenwechsler, Behälter und Boxen etc. aufgenommen werden können, was dadurch weiterhin die Flexibilität im Produktionsprozess wie auch im Bereich der Logistik steigern kann.

Die beispielhafte Transporteinrichtung kann dadurch vorteilhaft weitergebildet werden, dass an zumindest einer Seite der Transporteinrichtung mindestens eine Aufnahmevorrichtung vorgesehen ist, vorzugsweise an mindestens zwei Seiten der Transporteinrichtung mindestens eine Aufnahmevorrichtung vorgesehen ist, und besonders bevorzugt an jeder Seite der Transporteinrichtung mindestens eine Aufnahmevorrichtung vorgesehen ist.

Hierdurch können nun deutlich mehr technische Vorrichtungen und/oder Behälter zu ihrem jeweiligen Bestimmungsort mit nur einer Fahrt gebracht werden, als dies bei bisher bekannten Transportfahrzeugen möglich ist.

Die beispielhafte Transporteinrichtung kann dadurch vorteilhaft weitergebildet werden, dass die Transporteinrichtung ferner dazu eingerichtet ist, die Handhabungseinrichtung nach der Positionierung an der Werkzeugmaschine abzusetzen.

Diese Möglichkeit ist dahingehend besonders vorteilhaft, da die Transporteinrichtung nicht mit der Handhabungseinrichtung an Ort und Stelle verbleiben muss, sondern weitere Handhabungseinrichtungen transportieren kann, während z.B. die abgesetzte Handhabungseinrichtung ihre Funktion an der jeweiligen Werkzeugmaschine ausführt.

Die beispielhafte Transporteinrichtung kann dadurch vorteilhaft weitergebildet werden, dass die Aufnahmevorrichtungen ferner Anschlusselemente aufweisen, die für eine Übertragung von Steuerungssignalen und/oder Energie von der Transporteinrichtung an die Handhabungseinrichtung eingerichtet sind.

Hierdurch können in vorteilhafter Weise Energie und Signale zur Steuerung der Handhabungseinrichtung von der Transporteinrichtung an die Handhabungseinrichtung übertragen werden.

Die beispielhafte Transporteinrichtung kann dadurch vorteilhaft weitergebildet werden, dass die Anschlusselemente der Aufnahmevorrichtungen der Transporteinrichtung bei der Aufnahme der Handhabungseinrichtung eine Verbindung mit der Handhabungseinrichtung zur Übertragung von Steuerungssignalen und/oder Energie automatisch herstellen.

Hierdurch entfällt das händische Eingreifen eines Werkarbeiters und der Automatisierungsgrad der Produktions- und Logistikabläufe kann weiter gesteigert werden.

Die beispielhafte Transporteinrichtung kann dadurch vorteilhaft weitergebildet werden, dass die Aufnahmevorrichtungen jeweils eine Kontrollvorrichtung zum Überwachen des Zustands der Aufnahme der jeweiligen Handhabungseinrichtung aufweisen.

Die beispielhafte Transporteinrichtung kann dadurch vorteilhaft weitergebildet werden, dass die Kontrollvorrichtung dazu eingerichtet ist, die Steuerungssignale, die Energieübertragung, und/oder einen Arretierzustand der an der jeweiligen Aufnahmevorrichtung aufgenommenen Handhabungseinrichtung zu überwachen.

Dies ist insbesondere dahingehend von Vorteil, um eventuell auftretende Fehlfunktionen der Handhabungseinrichtungen zu vermeiden und um die Sicherheit der Handhabungseinrichtung an der Transporteinrichtung wie auch die Sicherheit der Werkarbeiter in unmittelbarer Nähe der Handhabungseinrichtung zu gewährleisten.

Zudem können hierdurch fehlerhafte Aufnahmen bzw. fehlerhafte Bestandteile (beschädigte Kontakte der Verbindungen für Energie- und/oder Signalübertragung etc.) schneller lokalisiert werden und entsprechend schneller ausgetauscht / repariert werden.

Die beispielhafte Transporteinrichtung kann dadurch vorteilhaft weitergebildet werden, dass die Aufnahmevorrichtungen der Transporteinrichtung ferner zur Aufnahme von Materialträgern, insbesondere Gitterboxen mit Rohteilen und/oder Fertigteilen und zur Aufnahme eines Wechselgreifers eingerichtet sind.

Insbesondere ist es von Vorteil, wenn die Aufnahmevorrichtungen, durch die die Handhabungseinrichtungen, wie der Palettenwechsler, aber auch Materialpaletten, Gitterboxen etc. von der Transporteinrichtung aufgenommen werden können, einheitlich, also standardisiert sind.

Hierdurch können alle erdenklichen Handhabungseinrichtungen mit einer und dergleichen Schnittstelle versehen werden, sodass auch die Herstellung der Verbindung für Energie- und/oder Signalübertragung automatisiert erfolgen kann.

Die beispielhafte Transporteinrichtung kann dadurch vorteilhaft weitergebildet werden, dass der Palettenwechsler zur Aufnahme der Palette eine Aufnahmeklaue oder eine gabelförmige Aufnahme aufweist.

Weiterhin kann die beispielhafte Transporteinrichtung dadurch vorteilhaft weitergebildet werden, dass zumindest die Handhabungseinrichtung, der Materialträger, der Wechselgreifer und/oder der Palettenhalter dazu eingerichtet sind, von der Transporteinrichtung an einer für die Aufnahme der Handhabungseinrichtung, des Materialträgers, des Wechselgreifers und/oder des Palettenhalters eingerichteten Aufnahme der Werkzeugmaschine abgesetzt und/oder angedockt zu werden.

Zudem kann die beispielhafte Transporteinrichtung vorteilhaft dadurch weitergebildet werden, dass mehrere Aufnahmevorrichtungen der Transporteinrichtung einheitlich ausgebildet sind.

Durch den Einsatz der beispielhaften Transporteinrichtung kann die Flexibilität in den Produktionsabläufen erheblich verbessert werden sowie schnell auf Veränderungen in der Produktion reagiert werden.

Eine beispielhafte Werkzeugmaschine zur spanenden Bearbeitung eines Werkstücks, weist auf: eine Arbeitsspindel zum Aufnehmen eines Werkzeugs oder des Werkstücks, eine Palette zum Aufnehmen des Werkzeugs oder des Werkstücks und eine Handhabungseinrichtung zur Handhabung der Palette und/oder des Werkstücks, wobei die Handhabungseinrichtung durch eine beispielhafte Transporteinrichtung an der Werkzeugmaschine positionierbar ist.

Hierdurch bietet sich eine Reihe von Vorteilen, da die Transporteinrichtung jede beliebige Handhabungseinrichtung zu der Werkzeugmaschine bringen kann, welche für die jeweilig anstehenden Bearbeitungsschritte erforderlich oder gar notwendig ist. Dabei kann für die Werkzeugmaschine, insbesondere bei der Bestückung mit Werkstücken und/oder Werkzeugen, eine höherer Automatisierungsgrad erreicht werden und Zeiten, in denen die Werkzeugmaschinen autonom arbeiten, können verlängert werden.

Die beispielhafte Werkzeugmaschine kann dadurch vorteilhaft weitergebildet werden, dass die Werkzeugmaschine ferner Positioniereinrichtungen zur Lagepositionierung der Handhabungseinrichtung relativ zur Werkzeugmaschine aufweisen, für den Fall, dass die Handhabungseinrichtung durch die Transporteinrichtung an der Werkzeugmaschine abgesetzt wird.

Eine exakte Positionierung der Handhabungseinrichtung kann zum einen nicht nur vorteilhaft, sondern auch erforderlich sein, zum Beispiel wenn Paletten sehr präzise auf eine Palettenaufnahme gesetzt werden müssen oder zum Beispiel Bestückungsarbeiten erfolgen müssen.

Die beispielhafte Werkzeugmaschine kann dadurch vorteilhaft weitergebildet werden, dass die Positioniereinrichtungen Anschlusselemente aufweisen, die für eine Übertragung von Steuerungssignalen und/oder Energie von der Werkzeugmaschine an die abgesetzte Handhabungseinrichtung eingerichtet sind.

Hierdurch können in vorteilhafter Weise Energie und Signale zur Steuerung der Handhabungseinrichtung von der Werkzeugmaschine an die Handhabungseinrichtung übertragen werden und so unabhängig von der Übertragung der Energie bzw. der Signale seitens der Transporteinrichtung sein.

Die beispielhafte Werkzeugmaschine kann dadurch vorteilhaft weitergebildet werden, dass die Anschlusselemente der Positioniereinrichtungen der Werkzeugmaschine bei Absetzen der Handhabungseinrichtung durch die Transporteinrichtung eine Verbindung mit der Handhabungseinrichtung zur Übertragung von Steuerungssignalen und/oder Energie automatisch herstellen.

Hierdurch kann vorteilhafterweise der Automatisierungsgrad weiter erhöht werden und ein händisches Eingreifen eines Werkarbeiters kann entfallen.

Ein beispielhaftes Verfahren zur Handhabung einer Palette und/oder eines Werkstücks an der beispielhaften Werkzeugmaschine, weist die folgenden Schritte auf: Aufnehmen einer Handhabungseinrichtung zur Handhabung der Palette und/oder des Werkstücks mittels der beispielhaften Transporteinrichtung von einem Ablageplatz, Transportieren der Handhabungseinrichtung durch die Transporteinrichtung vom Ablageplatz zur Werkzeugmaschine, Positionieren der Handhabungseinrichtung durch die Transporteinrichtung an der Werkzeugmaschine, insbesondere vor einem Arbeitsraum der Werkzeugmaschine und Handhaben der Palette und/oder des Werkstücks durch die Handhabungseinrichtung an der Werkzeugmaschine.

Das beispielhafte Verfahren kann dadurch vorteilhaft weitergebildet werden, dass während des Schrittes Aufnehmen der Handhabungseinrichtung eine Verbindung zwischen Transporteinrichtung und Handhabungseinrichtung mittels Anschlusselemente der Transporteinrichtung hergestellt wird, über die Steuerungssignale und/oder Energie von der Transporteinrichtung zur Handhabungseinrichtung übertragen werden.

Das beispielhafte Verfahren kann dadurch vorteilhaft weitergebildet werden, dass vor dem Schritt Handhaben der Palette und/oder des Werkstücks folgende Schritte durchgeführt werden: Absetzen der Handhabungseinrichtung vor dem Arbeitsraum der Werkzeugmaschine durch die Transporteinrichtung, und Positionieren der Handhabungseinrichtung durch Positioniereinrichtungen der Werkzeugmaschine.

Das beispielhafte Verfahren kann dadurch vorteilhaft weitergebildet werden, dass beim Absetzen der Handhabungseinrichtung die Positioniereinrichtungen der Werkzeugmaschine eine Verbindung zwischen Werkzeugmaschine und Handhabungseinrichtung mittels Anschlusselemente der Werkzeugmaschine hergestellt wird, über die Steuerungssignale und/oder Energie von der Werkzeugmaschine zur Handhabungseinrichtung übertragen werden.

Das beispielhafte Verfahren kann dadurch vorteilhaft weitergebildet werden, dass vor dem Schritt Handhaben der Palette und/oder des Werkstücks folgende Schritte durchgeführt werden: Trennen der Verbindung zur Übertragung von Steuerungssignalen und/oder Energie von der Transporteinrichtung zur Handhabungseinrichtung und Weiterfahren der Transporteinrichtung von der Werkzeugmaschine zu dem Ablageplatz oder einer weiteren Werkzeugmaschine.

Das beispielhafte Verfahren kann dadurch vorteilhaft weitergebildet werden, dass nach dem Schritt Handhaben der Palette und/oder des Werkstücks folgende Schritte durchgeführt werden: Aufnehmen der Handhabungseinrichtung von den Positioniereinrichtungen der Werkzeugmaschine durch die Transporteinrichtung, wobei während des Aufnehmens der Handhabungseinrichtung die Verbindung zur Übertragung von Steuerungssignalen und/oder Energie von der Werkzeugmaschine zur Handhabungseinrichtung getrennt wird, und Weiterfahren der Transporteinrichtung mit wiederaufgenommener Handhabungseinrichtung von der Werkzeugmaschine zu dem Ablageplatz oder einer weiteren Werkzeugmaschine.

Weitere Aspekte und deren Vorteile als auch Vorteile und speziellere Ausführungsmöglichkeiten der vorstehend beschriebenen Aspekte und Merkmale werden aus den folgenden, jedoch in keinster Weise einschränkend aufzufassenden Beschreibungen und Erläuterungen zu den angehängten Figuren beschrieben.

### KURZBESCHREIBUNG DER FIGUREN

- Fig. 1: zeigt schematisch einen Teil einer Ausführungsform einer Transporteinrichtung ohne angekoppelten Palettenwechsler mit Aufnahmevorrichtungen zum Aufnehmen von Handhabungseinrichtungen.
- Fig. 2a: zeigt schematisch eine Detailansicht einer Aufnahmevorrichtung der Transporteinrichtung zum Aufnehmen von Handhabungseinrichtungen ohne daran angekoppelten Palettenwechsler.
- Fig. 2b: zeigt schematisch eine weitere Ausführung der Aufnahmevorrichtung der Transporteinrichtung zum Aufnehmen einer Handhabungseinrichtung ohne daran angekoppelten Palettenwechsler.
- Fig. 2c: zeigt schematisch eine weitere Ausführung der Aufnahmevorrichtung der Transporteinrichtung zum Aufnehmen einer Handhabungseinrichtung ohne daran angekoppelten Palettenwechsler, diesmal ohne den Antrieb.
- Fig. 2d: zeigt schematisch einen Stecker, der Medien, Energie und Signale von der Aufnahmevorrichtung auf die aufgenommene Einrichtung übertragen kann.
- Fig. 3: zeigt schematisch eine Ausführungsform der Transporteinrichtung mit Palettenwechsler und einer Palette.
- Fig. 4a: zeigt schematisch eine Ausführungsform der Transporteinrichtung bei einem Palettenwechsel, wobei die Transporteinrichtung eine Drehung vollzieht.
- Fig. 4b: zeigt schematisch die Transporteinrichtung mit einer Ausführungsform eines gabelförmigen Palettenwechslers.
- Fig. 5: zeigt schematisch eine Ausführungsform der Transporteinrichtung bei einem Palettenwechsel, wobei die Transporteinrichtung in ihrer Position verbleibt und der Palettenwechsler, wie in Fig. 3 gezeigt ein H-förmiger Palettenwechsler, sich dreht.
- Fig. 6: zeigt schematisch eine Ausführungsform der Transporteinrichtung bei einem Palettenwechsel, wobei der Palettenwechsler als Doppel-H ausgebildet ist und sich, wie gezeigt, drehen kann.
- Fig. 7: zeigt schematisch eine Ausführungsform der Transporteinrichtung bei einem Palettenwechsel, wobei der Palettenwechsler die Paletten in einer 60°-Verteilung aufnehmen kann.
- Fig. 8: zeigt schematisch eine Ausführungsform der Transporteinrichtung mit einem verschiebbaren Palettenwechsler.
- Fig. 9a: zeigt schematisch eine Ausführungsform der Transporteinrichtung mit einem Palettenwechsler, welcher über eine verstellbare Gabelbreite verfügt.
- Fig. 9b: zeigt schematisch eine Ausführungsform der Transporteinrichtung mit einem Palettenwechsler, welcher über eine verstellbare Gabellänge verfügt.
- Fig. 10: zeigt schematisch eine Ausführungsform der Transporteinrichtung mit einem Palettenwechsler für eine mehrstöckige Palettenablage.
- Fig. 11: zeigt schematisch eine weitere Ausführungsform der Transporteinrichtung mit einem Palettenwechsler für eine mehrstöckige Palettenablage.
- Fig. 12: zeigt schematisch die Transporteinrichtung bei der Beladung eines Rundspeichers einer Werkzeugmaschine mit Paletten.
- Fig. 13: zeigt schematisch eine beispielhafte Ausgestaltung eines Linearspeichers für Paletten-Handling mit mehreren Rüstplätzen und Ablageplätzen und mehreren Werkzeugmaschinen.
- Fig. 14a: zeigt schematisch eine Positionierung eines Palettenwechslers an einem Ablageplatz mittels konischer Aufnahmen.
- Fig. 14b: zeigt schematisch eine Positionierung eines Palettenwechslers bei einem Ablageplatz mit Rollentechnik.
- Fig. 15: zeigt schematisch eine Positionierung eines Teils der Transporteinrichtung ohne angekoppelten Palettenwechsler an einer Werkzeugmaschine mittels eines Prismas.
- Fig. 16a: zeigt schematisch eine Positionierung eines Teils der Transporteinrichtung ohne angekoppelten Palettenwechsler an einer Werkzeugmaschine mittels konischer Aufnahmen.
- Fig. 16b: zeigt schematisch einen Teil einer weiteren Ausführungsform der Transporteinrichtung ohne angekoppelten Palettenwechsler bei einer Positionierung und Energie- und/oder Signalverbindungsschluss mittels konischer Aufnahmen.
- Fig. 17a: zeigt schematisch einen Teil einer Ausführungsform der Transporteinrichtung ohne angekoppelten Palettenwechsler mit einer Höhenverstellung der Transporteinrichtung mittels Hubzylindern.
- Fig. 17b: zeigt schematisch einen Teil einer weiteren Ausführungsform der Transporteinrichtung ohne angekoppelten Palettenwechsler mit einer Höhenverstellung der Transporteinrichtung mittels Hubzylindern und einem Fahrwerk.
- Fig. 18: zeigt schematisch einen Teil einer Ausführungsform der Transporteinrichtung ohne angekoppelten Palettenwechsler mit einer Höhenverstellung der Aufnahmevorrichtung zur Aufnahme von Handhabungseinrichtungen der Transporteinrichtung (ohne Darstellung eines Palettenwechslers).
- Fig. 19: zeigt schematisch eine weitere Ausführungsform der Transporteinrichtung mit einem Palettenwechsler und einer Haube zum Schutz der transportierten Palette.
- Fig. 20a: zeigt schematisch einen Hallenboden/Platte mit rasterförmig angeordneten Konen zur Positionierung eines Teils der Transporteinrichtungen ohne angekoppelten Palettenwechsler.
- Fig. 20b: zeigt eine weitere Möglichkeit, die Konen an der Unterseite der Transporteinrichtung für die Positionierung vorzusehen.
- Fig. 21: zeigt schematisch ein Verfahren zur Handhabung einer Palette und/oder eines Werkstücks an einer Werkzeugmaschine.

### DETAILLIERTE BESCHREIBUNG DER FIGUREN UND BEVORZUGTER AUSFÜHRUNGSBEISPIELE DER VORLIEGENDEN ERFINDUNG

Im Folgenden werden Beispiele bzw. Ausführungsbeispiele der vorliegenden Erfindung detailliert unter Bezugnahme auf die beigefügten Figuren beschrieben. Gleiche bzw. ähnliche Elemente in den Figuren können hierbei mit gleichen Bezugszeichen bezeichnet sein, manchmal allerdings auch mit unterschiedlichen Bezugszeichen.

Es sei hervorgehoben, dass die vorliegende Erfindung jedoch in keinster Weise auf die im Folgenden beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikation der Merkmale der beschriebenen Beispiele bzw. durch Kombination einzelner oder mehrerer der Merkmale der beschriebenen Beispiele im Rahmen des Schutzumfanges der unabhängigen Ansprüche umfasst sind.

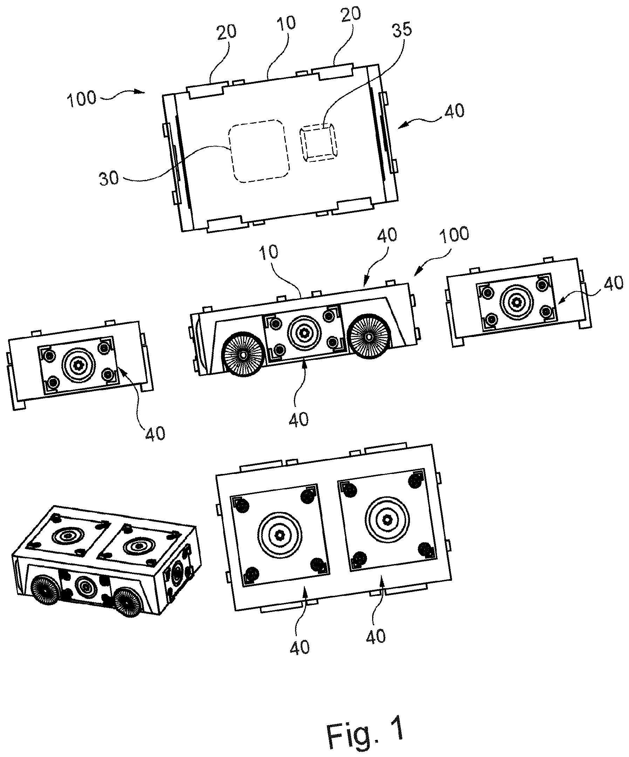

Fig. 1 zeigt schematisch einen Teil einer Ausführungsform der Transporteinrichtung 100 mit Aufnahmevorrichtungen 40 zum Aufnehmen von Handhabungseinrichtungen, allerdings ohne einen daran angekoppelten Palettenwechsler 200 als Handhabungseinrichtung.

Der in Fig. 1 gezeigte Teil der Ausführungsform der Transporteinrichtung 100 ist in einer besonders bevorzugten Ausführungsform als Fahrerloses Transportfahrzeug (FTF) eines Fahrerlosen Transportsystems (FTS) ausgestaltet.

Dabei weist die Transporteinrichtung 100 ein Fahrgestell 10 (Plattform) und einen Antrieb 20 auf.

Entsprechend einer Ausführung, die nicht unter die Erfindung, wie gegenwärtig beansprucht fällt, ist das Fahrgestell zur Aufnahme eines Energiespeichers 30 eingerichtet, wobei hierfür vorzugsweise ein elektrischer Energiespeicher 30 wie eine Batterie Anwendung findet
Weiterhin umfasst die Transporteinrichtung 100 in besonders bevorzugter Weise Räder 20, um die Transporteinrichtung 100 z.B. in einer Werkshalle zu bewegen. Dabei können diese Räder 20 über einen Antriebsstrang (nicht dargestellt) mit einem zentralen Antriebsmotor verbunden sein, sie können aber auch jeweils über einen eigenen Antriebsmotor (z.B. einen oder mehrere Elektromotoren) verfügen, welche durch eine interne Steuerung 35 einzeln angesteuert werden können.

Die Räder 20 können durch eine gegensätzlich gerichtete Bewegung die Transporteinrichtung 100 in eine drehende Bewegung versetzen, um eine Positionierung der Transporteinrichtung 100 herbeizuführen.

Ferner ist das Fahrgestell 10 vorzugsweise als Plattformträger ausgestaltet, welcher verschiedenste Aufnahmevorrichtungen 40 für Handhabungseinrichtungen (z.B. Automationskomponenten oder Transportkomponenten etc.) aufweist.

Dabei verfügt der Plattformträger besonders bevorzugt über n+1 Aufnahmevorrichtungen 40 für die verschiedenen Handhabungseinrichtungen, wobei die Aufnahmevorrichtungen 40 besonders bevorzugt am gesamten Plattformträger angeordnet sind. Insbesondere werden bevorzugt alle Seiten (Raumebenen) der Transporteinrichtung 100 für das Vorsehen einer Aufnahmevorrichtung 40 genutzt (siehe hierzu auch die verschiedenen Ansichten der Transporteinrichtung 100 in Fig. 1). Hierdurch können nun weit mehr Handhabungseinrichtungen aufgenommen und entsprechend bewegt werden als dies zum Beispiel mit einem handelsüblichen Transportfahrzeug wie einem Gabelstapler oder einem motorisierten Hubwagen möglich ist.

Jedoch sei darauf hingewiesen, dass die Anzahl und/oder die Verteilung der Aufnahmevorrichtungen 40 auf der Transporteinrichtung 100 nicht auf die in Fig. 1 gezeigte Anzahl/Verteilung beschränkt ist. Es kann beispielweise auch nur eine einzelne Aufnahmevorrichtung 40 beispielsweise auf der Oberseite der Transporteinrichtung 100 vorgesehen sein, und/oder aber auch zwei und mehr Aufnahmevorrichtungen 40 an einer oder mehreren Seiten der Transporteinrichtung 100 vorgesehen sein.

Ferner können die Aufnahmevorrichtungen 40, die auf der Oberseite der Transporteinrichtung 100 vorgesehene sind, von ihrer Größe und ihren Eigenschaften von den Aufnahmevorrichtungen 40 an den Seiten der Transporteinrichtung 100 abweichen. Dies kann beispielsweise dann vorteilhaft sein, wenn kleinere Handhabungseinrichtungen mit einem vergleichsweise geringen Gewicht an den Seiten der Transporteinrichtung 100 aufgenommen werden sollen und die schwereren Handhabungseinrichtungen vorzugsweise über den Achsen/dem Antrieb 20 der Transporteinrichtung 100 positioniert werden sollen.

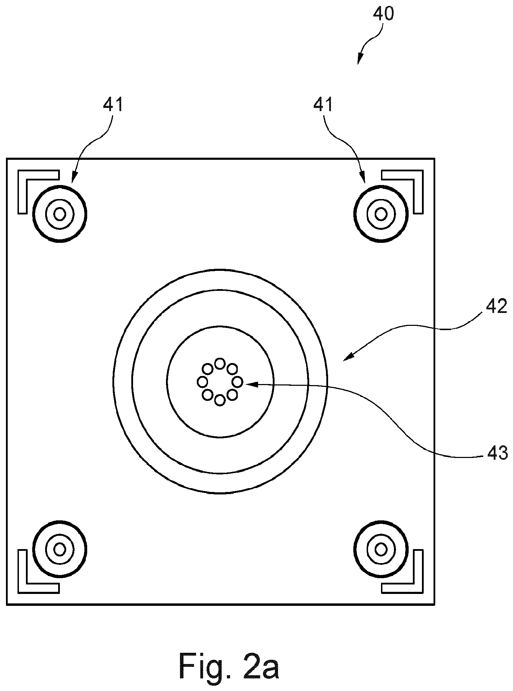

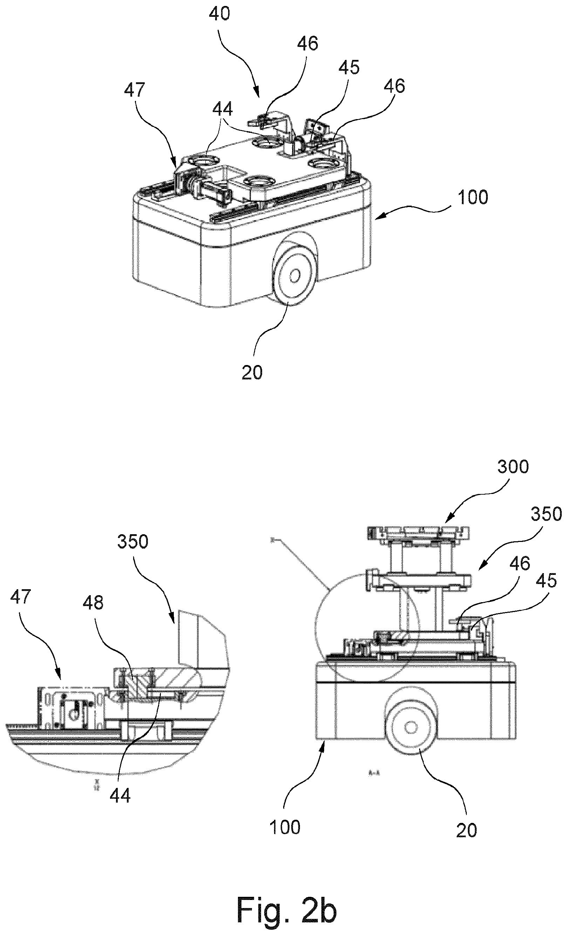

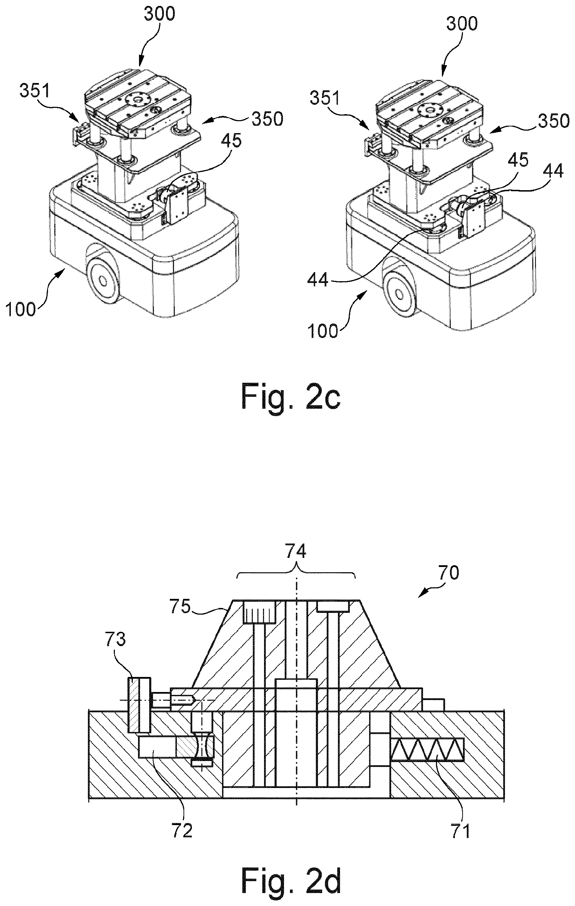

Weiterhin können beispielsweise aber auch die kleineren Aufnahmevorrichtungen 40 an den Seiten der Transporteinrichtung 100 über eine geringere Anzahl an Anschlüssen (siehe hierfür die Erläuterungen zur Fig. 2) im Vergleich zu den größeren Aufnahmevorrichtungen 40 auf der Oberseite der Transporteinrichtung 100 verfügen.

Vorzugsweise ist die Transporteinrichtung 100 mit einer Einheit zur optischen Überwachung seiner Umgebung (hier nicht gezeigt) und der angekoppelten Handhabungseinrichtungen ausgestattet. Diese Einrichtung ist vorzugsweise mit der Steuerungssoftware der internen Steuerung 35 gekoppelt und ermöglicht es auf Basis der Erkennung eine Handlung durchzuführen.

Fig. 2a zeigt schematisch eine Detailansicht einer Aufnahmevorrichtung 40 der Transporteinrichtung 100 zum Aufnehmen von Handhabungseinrichtungen (oder jeglicher anderer Einrichtungen) ohne daran angekoppelten Palettenwechsler 200.

Dabei sind die Aufnahmevorrichtungen 40 vorzugsweise zur mechanischen Fixierung der Handhabungseinrichtungen, zur Signalübertragung und Energieübertragung an die jeweilige Handhabungseinrichtung eingerichtet. Es kann je nach Handhabungseinrichtung nur eine der Übertragungsmöglichkeiten oder aber auch eine beliebige Kombination daraus genutzt werden.

Ferner sind besonders bevorzugt die Aufnahmevorrichtungen 40 automatisiert ausgeführt. Somit kann die Transporteinrichtung 100 selbständig die Handhabungseinrichtungen austauschen und ist dadurch flexibel für verschiedenste Aufgaben einsetzbar. Bei automatisierten Ausführungen der Transporteinrichtung 100 eignen sich zudem insbesondere Schnellkupplungen (z.B. Frontlader-Schnellkupplung) um automatisiert eine Verbindung für Energieübertragung bzw. Signalübertragung zwischen der Transporteinrichtung 100 und der Handhabungseinrichtung herzustellen.

Wie in Fig. 2a gezeigt, können beispielsweise konenförmige Abschnitte 41 der Aufnahmevorrichtung 40 dazu vorgesehen sein, die entsprechende Handhabungseinrichtung gegenüber der Aufnahmevorrichtung 40 auszurichten und zu fixieren. Für ein derartigen Ausrichten und gleichzeitiges Fixieren der Handhabungseinrichtung an der Aufnahmevorrichtung 40 können hier vorteilhaft Spannkonen verwendet werden, wie sie beispielsweise bereits von der Aufnahme für Paletten in einer Werkzeugmaschine bekannt sind.

Weiterhin kann die Aufnahmevorrichtung 40 eine Schnittstelle 42 zur Übertragung von mechanischer Energie (beispielsweise eine Rotation eines in der Transporteinrichtung 100 vorgesehenen Motors auf die Handhabungseinrichtung) und/oder elektrischer, hydraulischer und/oder pneumatischer Energie aufweisen. Ferner könnten aber auch beispielsweise Betriebsmittel wie Kühl-Schmierstoff von der Transporteinrichtung der entsprechend an der Aufnahmevorrichtung 40 aufgenommenen Handhabungseinrichtung zugeleitet werden. Hierfür können beispielsweise entsprechende Befestigungsmittel und elektrische und/oder Fluide leitende Anschlüsse (Befestigungsmittel und Anschlüsse 43) vorgesehen sein.

Zudem kann in vorteilhafter Weise die Schnittstelle 42 eine Einrichtung zur kontaktlosen Übertragung von Signalen zwischen der Aufnahmevorrichtung 40 der Transporteinrichtung 100 und der Handhabungseinrichtung aufweisen. Diese Einrichtung zur kontaktlosen Signalübertragung kann beispielsweise als Sender-/Empfängerspule ausgebildet sein, oder aber als Induktivkoppler mit I/O-Link zur berührungslosen Übertragung der Signale.

Dabei kann die Einrichtung an jeder beliebigen Stelle an der Schnittstelle 42 oder auch außerhalb der Schnittstelle 42 vorgesehen sein, wobei in vorteilhafter Weise die Einrichtung zur kontaktlosen Signalübertragung zentral/mittig in der Schnittstelle 42 vorgesehen ist.

Es sei an dieser Stelle darauf hingewiesen, dass beispielsweise die elektrischen und/oder Fluid leitenden Anschlüsse nicht zwingend auf der Schnittstelle 42 vorgesehen sein müssen. Sie können ebenfalls außerhalb der Schnittstelle 42 vorgesehen sein, um beispielsweise die Übertragung von rotatorischer Energie von der Übertragung der elektrischen/fluiden Energie zu trennen/zu separieren.

Zudem sind in besonders bevorzugter Weise die Aufnahmevorrichtungen 40 einheitlich bzw. standardisiert ausgeführt, so dass beliebige Komponenten bzw. Handhabungseinrichtungen mit entsprechend einheitlich ausgebildeten Aufnahmeelementen angebracht werden können und dabei im Wesentlichen die gleichen Schnellkupplungen zur Energie- bzw. Signalübertragung genutzt werden können.

Weiterhin verfügen die Aufnahmevorrichtungen 40 vorzugsweise über die Möglichkeit, den Zustand der aufgenommenen Handhabungseinrichtung zu überwachen. Dazu gehören vorzugsweise die Überwachung der Spannsituation der gekoppelten Handhabungseinrichtung (beispielsweise an den Spannkonen), deren Status und Signale, sowie deren Energieübertragung.

Bei der Überwachung des Spannungszustandes können hierfür vorzugsweise eine Auflagekontrolle oder eine Spannkontrolle in den Aufnahmevorrichtungen 40 verwendet werden, wobei die Auflagekontrolle vorzugsweise über elektrische Signale den Zustand ermittelt, oder aber alternativ Blasluft dafür verwenden kann.

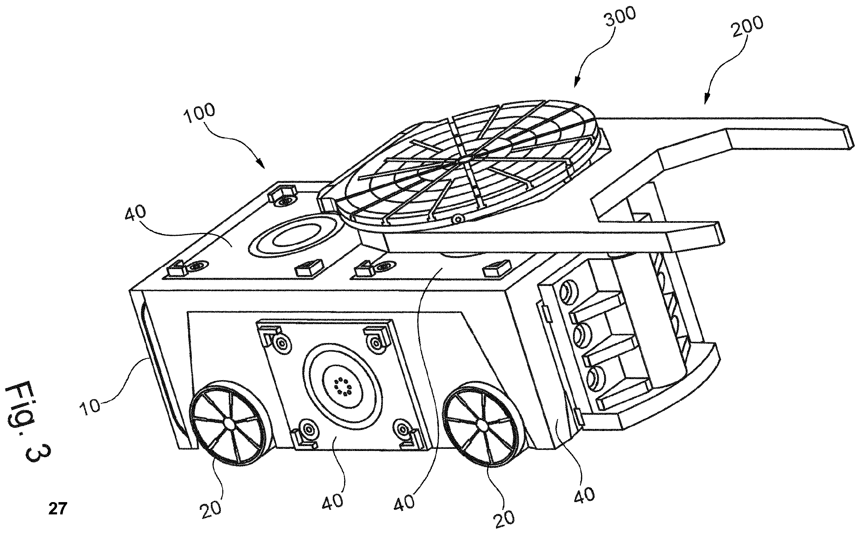

Beispielhaft kann die Transporteinrichtung 100 neben dem Palettenwechsler als Handhabungseinrichtung aufnehmen: Materialpaletten, Gitterboxen und weitere Materialträger, Ablageplätze für Roboterzubehör (z. B. Wechselgreifer), Werkzeuge für z. B. Werkzeugmaschinen, Staplergabel etc. Für weitere Details sei an dieser Stelle auf die Figuren 3 bis 11 verwiesen.

Es sei an dieser Stelle darauf hingewiesen, dass die Möglichkeiten zur Aufnahme durch die Aufnahmevorrichtungen 40 der Transporteinrichtung 100 aufgenommen werden können, in keinster Weise durch die oben genannte Aufzählung erschöpft sind.

Vorzugsweise verfügt die interne Steuerung 35 der Transporteinrichtung 100 über eine eigene Steuersoftware, welche die Verfahr- und Transportbewegungen steuern und überwachen kann. Die Steuersoftware könnte zum Beispiel um einzelne Softwarebausteine erweitert werden, welche für die jeweiligen Komponenten bzw. Handhabungseinrichtungen notwendig sind. Dabei kann es sich z.B. um die Anbindung einer Robotersteuerung oder um die Anbindung der Ansteuerung eines Palettenwechslers handeln.

Fig. 2b zeigt schematisch eine weitere Ausführung der Aufnahmevorrichtung 40 der Transporteinrichtung 100 zum Aufnehmen einer Handhabungseinrichtung (oder jeglicher anderer Einrichtungen) ohne daran angekoppelten Palettenwechsler 200, sondern mit angekoppeltem Palettenhalter 350.

Dabei weist die Aufnahmevorrichtung 40 mindestens eine Vertiefung 44 (beispielsweise eine Ausfräsung oder eine Bohrung) auf, durch die ein Bolzen 48 einer Einrichtung (beispielsweise Palettenwechsler 200, Palettenhalter 350 oder jegliche andere Einrichtung) aufgenommen werden kann. Dabei weist die Vertiefung 44 eine größere Ausdehnung auf als beispielsweise der Durchmesser des Bolzens 48, so dass der Bolzen 48 auf dem Grund der Vertiefung 44 verschiebbar gelagert werden kann. Ferner kann die Vertiefung 44 an ihrer Oberseite zusätzlich oder alternativ zum Grund mindestens eine Aufnahmefläche (zur Auflage der aufgenommenen Einrichtung) aufweisen, durch die die Einrichtung aufgenommen werden kann.

Es sei an dieser Stelle bereits darauf hingewiesen, dass die Vertiefungen 44 an der Einrichtung vorgesehen sind, und die Bolzen 48 dafür an der Aufnahmevorrichtung 40 vorgesehen sind. Zudem sei darauf hingewiesen, dass es neben der Kombination Vertiefung 44/Bolzen 48 auch noch andere Formpaarungen zur Aufnahme der Einrichtung an der Aufnahmevorrichtung 40 denkbar sind, beispielsweise Prisma und Kegel. Die hier genannten und beschriebenen Möglichkeiten sind nicht als abschließend aufzufassen.

Ferner kann die Aufnahmevorrichtung 40 eine Vorrichtung 46 zur Zentrierung der von der Aufnahmevorrichtung 40 aufgenommenen Einrichtung (hier exemplarisch eines Palettenhalters 350) gegenüber der Transporteinrichtung 100 bzw. der Aufnahmevorrichtung 40 aufweisen. Dies ist insbesondere von Vorteil, um eventuelle Positionierungenauigkeiten der aufgenommenen Einrichtung auf der Aufnahmevorrichtung 40 durch die Transporteinrichtung 100 auszugleichen.

Dabei erfolgt die Aufnahme und gegebenenfalls eine Zentrierung des beispielhaften Palettenhalters 350 an der Aufnahmevorrichtung 40 bzw. durch die Zentriervorrichtung 46 wie folgt:
Zu Beginn fährt die Transporteinrichtung 100 mit der jeweiligen Aufnahmevorrichtung 40 (und einer gewissen Positionierungenauigkeit) unter die aufzunehmende Einrichtung (hier beispielsweise der Palettenhalter 350). Dabei kann der Palettenhalter 350 gegen ein Druckstück 45 gedrückt werden, dass an der Seite der Aufnahmevorrichtung 40 vorgesehen ist, wie die Zentriervorrichtung 46. Dieses Druckstück 45 sorgt für eine Vorspannung des Palettenhalters 350 gegenüber der Aufnahmevorrichtung 40 in entgegengesetzter Richtung zur Zentriervorrichtung 46.

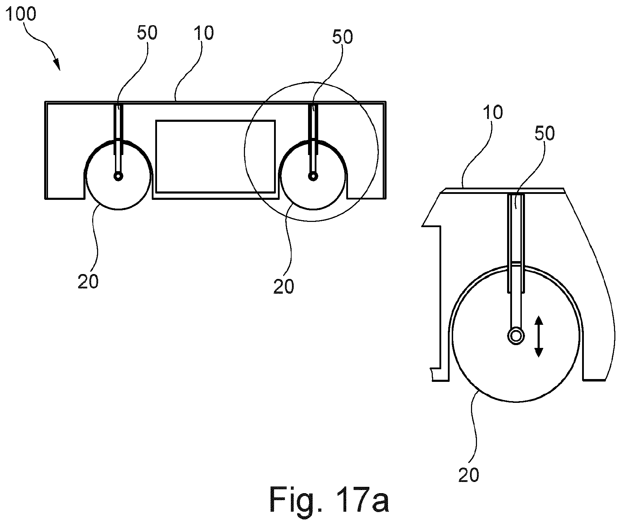

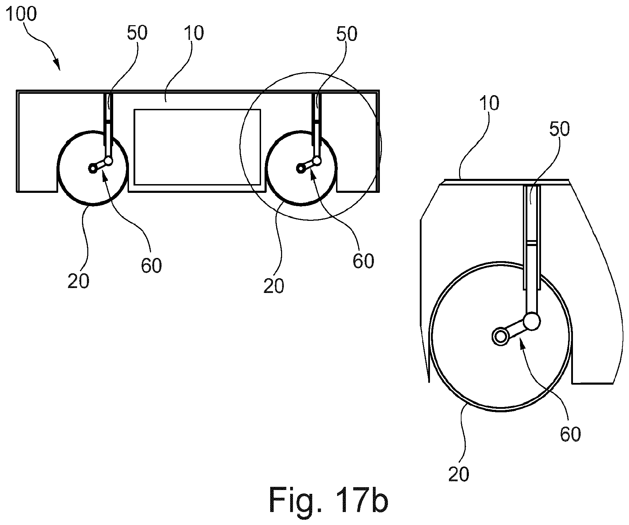

Anschließend hebt sich die Transporteinrichtung 100 an (beispielsweise durch einen Mechanismus wie in Fig. 17a und 17b gezeigt), so dass die Bolzen 48 in die Vertiefungen 44 einfädeln, wobei die Transporteinrichtung 100 so lange weiter angehoben wird, bis der Palettenhalter 350 vollständig in den Vertiefungen 44 bzw. an deren Oberseite aufliegt.

Danach hebt sich die Transporteinrichtung 100 weiter an, bis der Palettenhalter 350 aus seiner Aufnahme (hier nicht gezeigt) herausgehoben wird und damit vollständig von der Transporteinrichtung 100 getragen wird.

Im Anschluss daran kann nun der Palettenhalter 350 auf der Aufnahmevorrichtung 40 zentriert (und dabei auch fixiert) werden. Hierbei kann beispielsweise der Antrieb 47 zur Verschiebung der Vertiefungen 44, die beispielsweise auf einer Gleit- oder Kugelführung gleitend gelagert sind, in Richtung der Zentriervorrichtung 46 aktiv werden.

Durch ihn wird der bisher auf der Aufnahmevorrichtung 40 (bzw. in und/oder auf den Vertiefungen 44) schwimmend gelagerte Palettenhalter 350 in Richtung der Zentriervorrichtung 46 verschoben und gegen die Zentriervorrichtung 46 (und evtl. auch stärker gegen das Druckstück 45) gedrückt, so dass eine Ausrichtung des Palettenhalters 350 an der Zentriervorrichtung 46 erfolgt (beispielsweise in dem die Zentriervorrichtung 46 ein Prisma/zwei Prismen aufweist und sich entsprechende Stifte/Bolzen des Palettenhalters 350 an diesem Prisma/diesen Prismen ausrichtet).

Dabei kann der Antrieb 47 zwei Endlagen aufweisen: Zum einen, wenn der Antrieb 47 die Vertiefungen so weit wie möglich in Richtung Zentriervorrichtung 46 verschoben/verfahren hat, dann ist der Palettenhalter 350 fixiert und ausgerichtet. Und zum anderen, wenn der Antrieb 47 die Vertiefungen 44 mit dem größtmöglichen Abstand zur Zentriervorrichtung 47 verfahren hat, der Palettenhalter 350 frei ist und sich dieser anhand anderer Elemente (beispielsweise anhand einer Aufnahme an einer Werkzeugmaschine, einem Rüstplatz, einem Magazinplatz oder Ähnlichem) ausrichten kann. In diesem Zustand kann der Palettenhalter 350 entsprechend an eine Aufnahme übergeben oder von der Aufnahme aufgenommen werden.

Die Fixierung des Palettenhalters 350 auf der Aufnahmevorrichtung 40 kann nun derart erfolgen, dass zum einen die Zentriervorrichtung 46 selbst einen Fixierabschnitt aufweist, in den der Palettenhalter 350 eingefädelt wird und dort arretiert wird.

Oder aber die Vertiefungen 44 werden durch den Antrieb 47 derart weit in Richtung der Zentriervorrichtung 46 verschoben, dass mindestens ein Bolzen 48 des Palettenhalters 350 gegen der der Zentriervorrichtung 46 abgewandten Seite einer der Vertiefungen 44 gedrückt wird (siehe hierfür das mittlere Bild der Fig. 2b) und dadurch eine Fixierung des Palettenhalters 350 gegenüber der Aufnahmevorrichtung 40 erfolgt.

Ferner kann eine Fixierung des Palettenhalters 350 an der Aufnahmevorrichtung 40 auch dadurch herbeigeführt werden, dass das Druckstück 45 den Palettenhalter 350 gegen die der Zentriervorrichtung 46 abgewandten Seite einer der Vertiefungen 44 drückt (siehe hierfür das mittlere Bild der Fig. 2b).

Es sei an der Stelle darauf hingewiesen, dass aber auch alle genannten Möglichkeiten der Fixierung des Palettenhalters 350 gegenüber der Aufnahmevorrichtung 40 in Kombination miteinander stattfinden können. Zudem sei darauf hingewiesen, dass die genannten Möglichkeiten der Fixierung nicht als abschließend aufzufassend sind, es können hier noch weitere Möglichkeiten in Betracht kommen.

Es sei zudem darauf hingewiesen, dass der Antrieb 47 nicht zwingend notwendig ist, um den Palettenhalter 350 zu fixieren bzw. zu zentrieren. Es können vielmehr auch noch weitere Möglichkeiten zur Zentrierung des Palettenhalters 350 gegenüber der Aufnahmevorrichtung 40 der Transporteinrichtung 100 genutzt werden.

Fig. 2c zeigt schematisch eine weitere Ausführung der Aufnahmevorrichtung 40 der Transporteinrichtung 100 ohne daran angekoppelten Palettenwechsler 200, sondern mit angekoppeltem Palettenhalter 350 diesmal ohne den Antrieb 47.

Hierbei weist die Aufnahmevorrichtung 40 wieder zumindest eine Vertiefung 44 sowie ein Druckstück 45 auf, wobei die zumindest eine Vertiefung 44 nicht weiter gegenüber der Transporteinrichtung 100 positioniert werden kann (wie dies beispielswiese durch den Antrieb 47 wie in Fig. 2b beschrieben möglich war).

Stattdessen wirkt einzig das Druckstück 45 als vorspannendes Element, der den Palettenhalter 350 gegen die zumindest eine Vertiefung 44 drückt und dadurch den Palettenhalter 350 fixiert (und ein Stück weit auch ausrichtet) gegenüber der Aufnahmevorrichtung 40 (siehe rechtes Bild der Fig. 2c). Diese Relativlage von Palettenhalter 350 zu Aufnahmevorrichtung 40 liegt vor, wenn der Palettenhalter 350 durch die Transporteinrichtung 100 verfahren wird.

Soll jedoch der Palettenhalter 350 an eine Aufnahme übergeben werden, so richtet sich, aufgrund des Anfahrens des Palettenhalters 350 an die Aufnahme, der Palettenhalter 350 mittels der Ausrichtelemente 351 an der aufnehmenden Aufnahme (mechanisch) aus und drückt dabei das Druckstück 45 zusammen (siehe linkes Bild der Fig. 2c).

Fig. 2d zeigt schematisch einen Stecker 70, der Medien, Energie und Signale von der Aufnahmevorrichtung 40 auf die aufgenommene Einrichtung (Palettenwechsler200, Palettenhalter 350 oder jegliche andere Einrichtung) übertragen kann und dabei automatisiert die entsprechenden Verbindungen zwischen Aufnahmevorrichtung 40 und der aufgenommenen Einrichtung herstellt.

Die Besonderheit des Steckers 70 liegt nun darin, dass er so eingerichtet ist, dass er ebenfalls eventuelle Positionierungenauigkeiten der Transporteinrichtung 100 ausgleichen kann.

Hierfür weist der Stecker 70 ebenfalls ein (gefedertes) Druckstück 71 auf, das den schwimmend gelagerten Steckerkörper 75 in Richtung einer Steckerfixierung 72 vorspannt, wobei ferner ein mechanischer Anschlag 73 vorhanden sein kann, gegen den der Steckerkörper 75 vorgespannt wird. Dieser mechanische Anschlag 73 kann beispielsweise als Prisma ausgeführt sein, dass zusätzlich eine Ausrichtung des Steckerkörpers 75 ermöglicht.

Wird nun die Transporteinrichtung 100 für das Aufnehmen der Einrichtung unter die Einrichtung gefahren und angehoben, so kann sich der Stecker 70 aufgrund der schwimmenden Lagerung und der konischen Form des Steckerkörpers 75 in die entsprechend ausgebildete (konische) Vertiefung des Palettenhalters 350 (oder einer anderen Einrichtung) eingeführt und ausgerichtet werden, so dass die Anschlussschnittstellen 74 des Steckers 70 mit den entsprechenden Gegenstücken an dem Palettenhalter 350 eine Verbindung eingehen können. Umgekehrt kann natürlich durch Absenken der Aufnahmevorrichtung 40 in Relation zur aufgenommenen Einrichtung die Verbindung des Steckers 70 (mit den Anschlussschnittstellen 74) wieder vom Palettenhalter 350 gelöst werden.

Fig. 3 zeigt schematisch eine Ausführungsform der Transporteinrichtung 100 mit einem Palettenwechsler 200 und einer Palette 300.

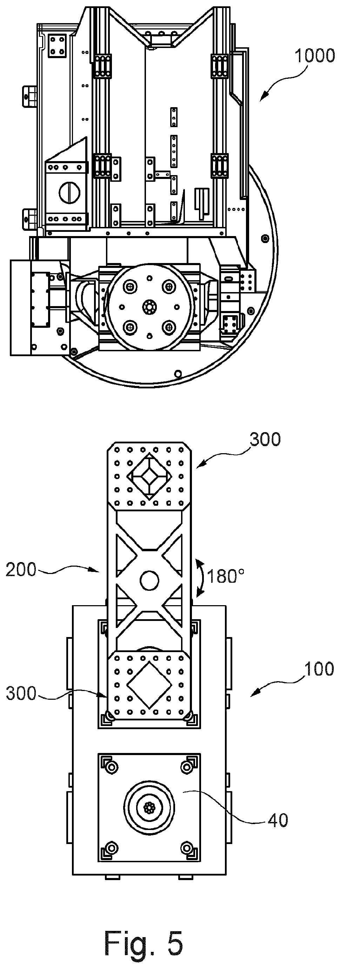

Dabei sind neben den bereits beschriebenen Elementen des Fahrgestells 10, der Räder 20 und der Aufnahmevorrichtungen 40 ein Palettenwechsler 200 als Handhabungseinrichtung in einer Doppelgabel-Ausführung (H-förmige Gabel; siehe hierzu auch Fig. 5) und beispielhaft eine Palette 300 dargestellt.

Dabei wurde die Handhabungseinrichtung (Palettenwechsler 200) an der Vorderseite der Transporteinrichtung 100 durch eine der Aufnahmevorrichtungen 40 aufgenommen und entsprechend mechanisch fixiert und Verbindungen zur Energie- wie auch zur Signalübertragung zur Ansteuerung und zum Antreiben des Palettenwechslers 200 geschlossen.

Nun kann die Transporteinrichtung 100 mittels des aufgenommenen Palettenwechslers 200 als Handhabungseinrichtung zu einer entsprechenden Werkzeugmaschine 1000 (hier nicht dargestellt) fahren und die getragene Palette 300 in der Werkzeugmaschine 1000 einsetzen bzw. mit der bereits in der Werkzeugmaschine 1000 vorhandenen Palette 300 austauschen.

Ein besonderer Vorteil des angekoppelten Palettenwechslers 200, insbesondere bei mehreren durch die Transporteinrichtung 100 aufgenommenen Palettenwechslern 200, besteht im Gegensatz zu Transportfahrzeugen mit nur einer Gabel darin, dass dadurch notwendige Verfahrbewegungen beim Austausch von Paletten vermieden, bzw. reduziert werden.

Der Palettenwechsler 200 verfügt vorzugsweise über entsprechende Aufnahmeelemente für die Aufnahmevorrichtungen 40 der Transporteinrichtung 100 inkl. mechanischer Fixierung, Positionierung, Signalübertragung und Energieübertragung. Ferner sollte der Palettenwechsler 200 passend zu den zu automatisierenden Werkzeugmaschinen gestaltet sein.

Vorzugsweise verfügt der Palettenwechsler 200 über n+1 Aufnahmen (Aufnahmeklaue oder eine Gabel-förmige Aufnahme, vorzugsweise für verschiedene Palettengrößen) für Paletten 300, wobei der Palettenwechsler 200 zudem mit einer Drehachse ausgestattet ist, welche einen Austausch der Paletten 300 durch eine Drehbewegung ermöglicht.

Vorzugsweise hat der Palettenwechsler 200 noch eine weitere Achse um die Paletten 300 aus ihrer Spannsituation in der Werkzeugmaschine 1000 zu bewegen. Meist handelt es sich hierbei um eine Hubachse.

Eine Gabel-förmige Aufnahme könnte zudem in ihren Abmessungen verstellbar sein, um mehrere Varianten und Größen von Paletten 300 aufnehmen zu können. Ferner könnte auch die Aufnahmeklaue der Palettengröße anpassbar sein.

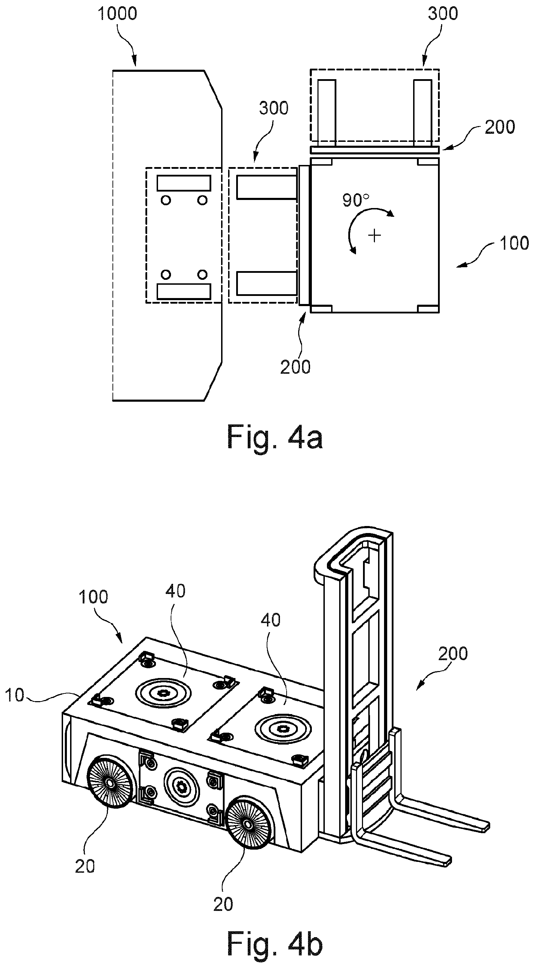

Fig. 4a zeigt schematisch eine Ausführungsform der Transporteinrichtung 100 bei einem Palettenwechsel mittels zweier gabelförmiger Palettenwechsler 200, wobei die Transporteinrichtung 100 eine Drehung vollzieht (im gezeigten Beispiel um 90°, wobei auch andere Winkel, insbesondere 180°, möglich sind), um den Wechsel der Paletten 300 durchzuführen.

Dabei fährt die Transporteinrichtung 100 an einen Arbeitsraum der Werkzeugmaschine 1000 heran und positioniert sich derart vor den Arbeitsraum, dass die in dem Arbeitsraum bereits vorhandene Palette 300 von dem unbeladenen gabelförmigen Palettenwechsler 200 aufgenommen werden kann (z.B. mittels einer Schwenkbewegung der Transporteinrichtung 100, oder einer an der Transporteinrichtung 100 aufgenommenen Teleskop-Mechanik zum Ausheben der Palette 300, oder durch bloßes Verfahren der Transporteinrichtung 100). Danach dreht sich die Transporteinrichtung 100 um 90°, so dass der zweite Palettenwechsler 200 seine mitgeführte Palette 300 in den Arbeitsraum der Werkzeugmaschine 1000 einlegen kann.

Fig. 4b zeigt schematisch die Transporteinrichtung 100 mit einer Ausführungsform eines gabelförmigen Palettenwechslers 200.

Insbesondere kann hierbei der gabelförmige Palettenwechsler 200 als Hubgabel, wie dies beispielsweise von Gabelstaplern bekannt ist, ausgeführt sein. Eine entsprechend an dem gabelförmigen Palettenwechsler 200 vorgesehene Hubmechanik kann dabei die Hubgabel in ihrer Höhe verstellen und so die Einsatzmöglichkeiten des gabelförmigen Palettenwechslers 200 deutlich vergrößern. Die Hubmechanik muss jedoch nicht zwingend an dem gabelförmigen Palettenwechsler 200 vorgesehen sein.

Fig. 5 zeigt schematisch eine Ausführungsform der Transporteinrichtung 100 bei einem Palettenwechsel, wobei die Transporteinrichtung 100 an ihrer Position verbleibt und der Palettenwechsler 200, wie in Fig. 3 gezeigt ein H-förmiger Palettenwechsler 200, sich dreht.

Dabei fährt die Transporteinrichtung 100, wie bereits bei Fig. 4a beschrieben, an den Arbeitsraum der Werkzeugmaschine 1000 heran und positioniert sich derart vor den Arbeitsraum, dass die in dem Arbeitsraum bereits vorhandene Palette 300 von einer freien Gabel des Doppelgabelförmigen (oder H-förmigen) Palettenwechslers 200 aufgenommen werden kann.

Nun wird im Anschluss daran der Palettenwechsler 200 derart auf der Transporteinrichtung 100 gedreht, dass die auf der anderen Gabel mitgeführte Palette 300 in den Arbeitsraum der Werkzeugmaschine 1000 eingelegt werden kann.

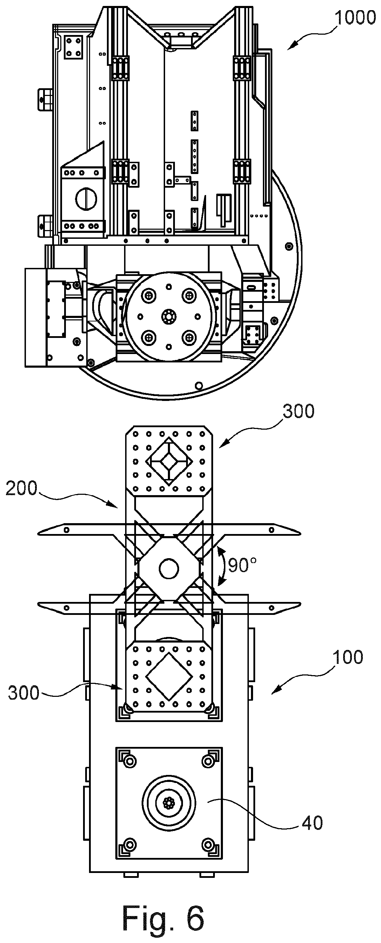

Fig. 6 zeigt schematisch eine Ausführungsform der Transporteinrichtung 100 bei einem Palettenwechsel, wobei der Palettenwechsler 200 als Doppel-H ausgebildet ist und sich, wie gezeigt, drehen kann. Dabei wird im Wesentlichen der gleiche Ablauf vollzogen wie in Fig. 5 beschrieben.

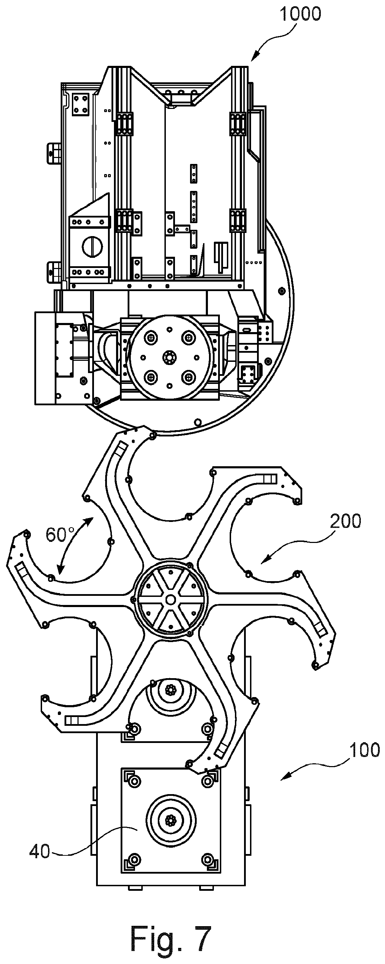

Fig. 7 zeigt schematisch eine Ausführungsform der Transporteinrichtung 100 bei einem Palettenwechsel, wobei der Palettenwechsler 200 nun Paletten 300 in einer 60°-Verteilung aufnehmen und sich, wie gezeigt, drehen kann. Dabei wird im Wesentlichen der gleiche Ablauf vollzogen wie in Fig. 5 beschrieben.

Dabei weisen die Palettenwechsler 200 der Figuren 6 und 7 den Vorteil auf, dass sie deutlich mehr Paletten 300 mit sich führen können und so mehrere Werkzeugmaschinen 1000 mit Paletten 300 versorgt werden können, ohne dass die Transporteinrichtung 100 gleich wieder zu einem Rüstplatz oder ähnlichem zurück fahren muss, um eine andere Palette 300 zu holen. Eine enorme Zeit- und Energieeinsparung ist hierdurch möglich.

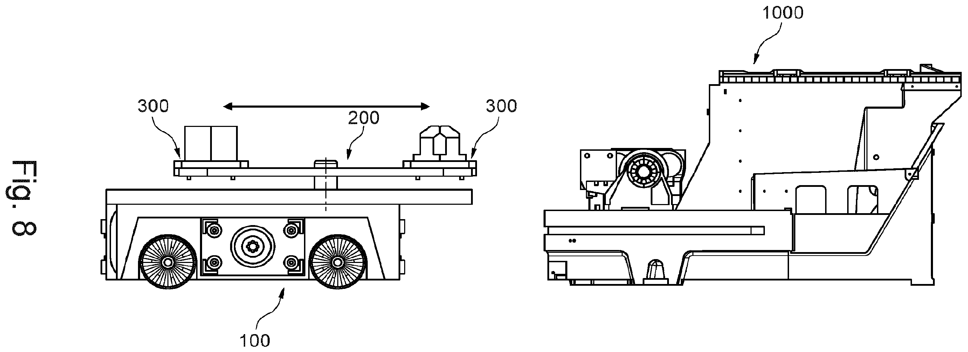

Fig. 8 zeigt schematisch eine Ausführungsform der Transporteinrichtung 100 (sowie Fahrgestell 10 und Räder 20) mit einem verschiebbarem Palettenwechsler 200.

Weiterhin kann es vorteilhaft sein, wenn neben der Möglichkeit des Drehens des Palettenwechslers 200 die Möglichkeit besteht, den Palettenwechsler 200 gegenüber der Transporteinrichtung 100 zu verschieben, so dass beispielsweise die Drehachse des Palettenwechslers 200 gegenüber der Transporteinrichtung 100 individuell positioniert werden kann.

Dabei kann es zusätzlich von Vorteil sein, wenn die Verschiebung des Palettenwechslers 200 nicht nur, wie in Fig. 8 gezeigt, in einer Richtung, sondern mindestens noch in einer weiteren, senkrecht dazu verlaufenden Richtung stattfinden kann, um die Positionierung des Palettenwechslers 200 gegenüber der Transporteinrichtung 100 und/oder der Werkzeugmaschine 1000 noch individueller zu ermöglichen.

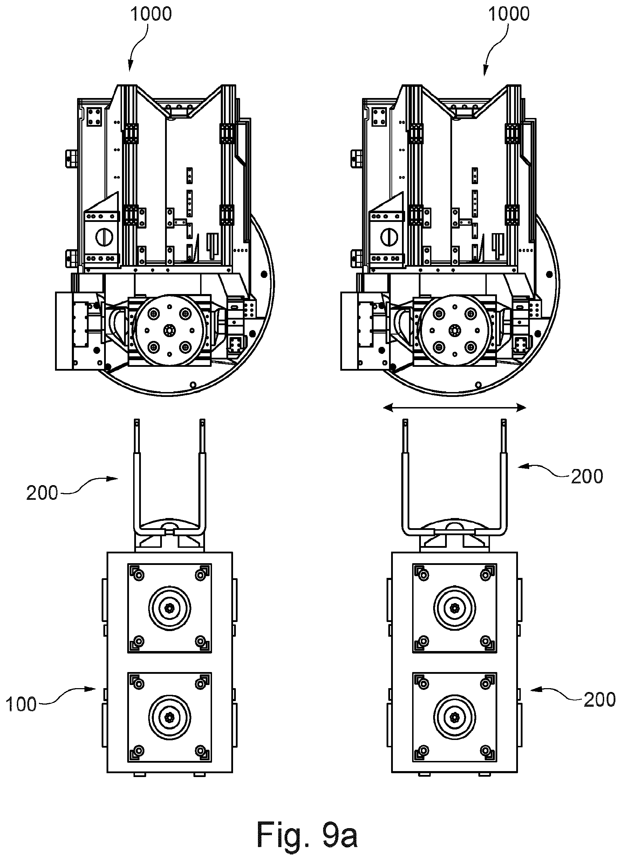

Fig. 9a zeigt schematisch eine Ausführungsform der Transporteinrichtung 100 mit einem Palettenwechsler 200, welcher über eine verstellbare Gabelbreite verfügt.

Hierdurch kann nun der Palettenwechsler 200 auf die verschiedenen Größen der Palette 300 angepasst werden, welche durch die Transporteinrichtung 100 zur Werkzeugmaschine 1000 gebracht werden soll. Dies steigert weiterhin die Flexibilität und die Anwendungsbreite eines einzelnen Palettenwechslers 200.

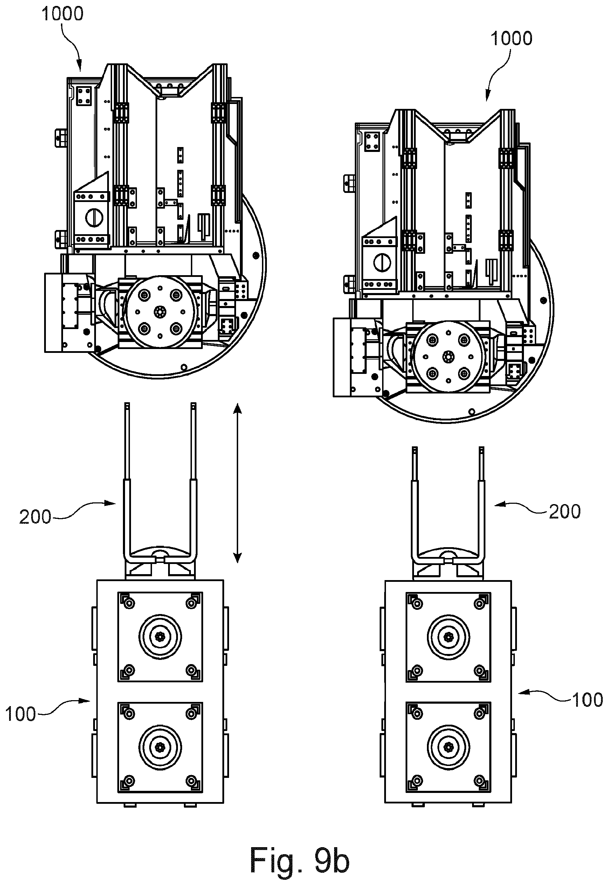

Zudem kann, wie in Fig. 9b gezeigt, der Palettenwechsler 200 in seiner Länge verstellt werden, um zusätzlich auf die verschiedenen Größen der Palette 300 angepasst zu werden. Dies steigert weiterhin die Flexibilität und die Anwendungsbreite eines einzelnen Palettenwechslers 200.

Ferner kann beispielsweise eine veränderbare Länge des Palettenwechslers 200 aber auch dafür genutzt werden, um eine Palette 300 weiter hinein in die Werkzeugmaschine 1000 zu legen. Dies kann bei bestimmten Bauformen von Werkzeugmaschinen 1000 von Vorteil sein oder wenn beispielsweise die Transporteinrichtung 100 die Palettenaufnahme der Werkzeugmaschine 1000 nicht bis unmittelbar davor anfahren kann.

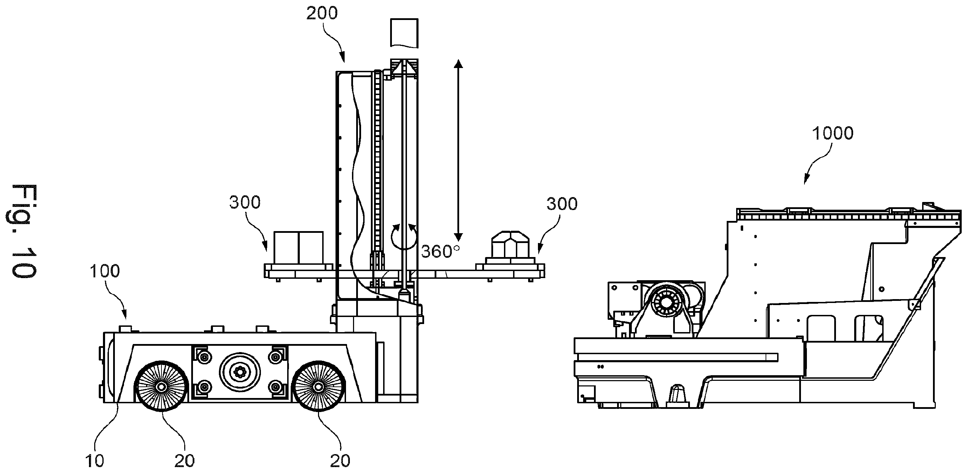

Fig. 10 zeigt schematisch eine Ausführungsform der Transporteinrichtung 100 (sowie Fahrgestell 10 und Rädern 20) mit einem Palettenwechsler 200 für eine mehrstöckige Palettenablage.

Durch die Aufnahmevorrichtungen 40 ist es zudem möglich, einen mehrstöckigen Palettenwechsler 200 an der Transporteinrichtung 100 aufzunehmen und so mehrstöckige Palettenablagen zu bedienen.

Vorzugsweise wird hierfür eine Hub-Dreheinheit mit Aufnahmen für n+1 Paletten 300 vorgesehen, wobei die Hubachse des Palettenwechslers 200 zur Anordnung n+1 übereinander liegender Paletten 300 genutzt werden kann. Dadurch wird gegenüber einer nur flächigen Anordnung von Paletten 300 eine höhere Packungsdichte der Paletten 300 erreicht.

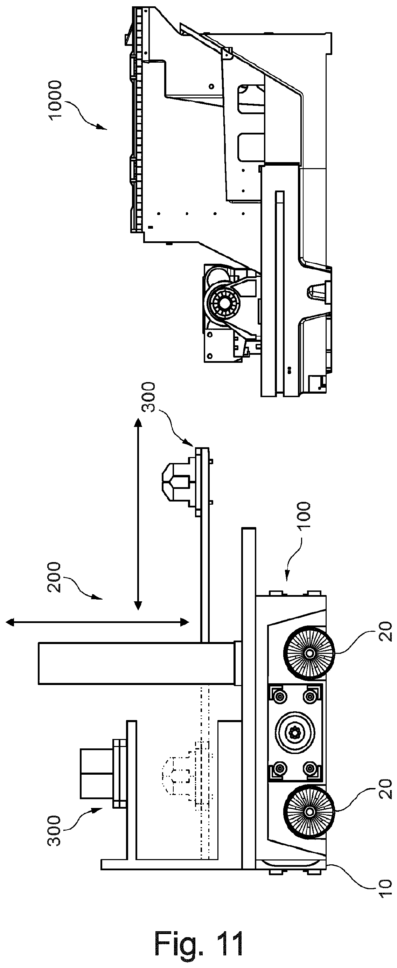

Fig. 11 zeigt schematisch eine weitere Ausführungsform der Transporteinrichtung 100 (sowie Fahrgestell 10 und Räder 20) mit einem Palettenwechsler 200 für eine mehrstöckige Palettenablage.

Dabei weist die Transporteinrichtung 100 ferner eine eigene, mehrstöckige Palettenablage auf (links neben dem Palettenwechsler 200 gezeigt), um zusätzlich Speicherkapazitäten für Paletten 300 aufzuweisen und somit mehr Paletten 300 zu transportieren.

Zudem kann es vorteilhaft sein, den Palettenwechsler 200 derart auszuführen, dass er durch eine Hub-Schiebeeinheit für die Anordnung n+1 übereinander liegender Paletten 300 genutzt werden kann und somit ebenfalls optimal die mehrstöckige Palettenablage, die auf der Transporteinrichtung 100 vorgesehen ist, zu bedienen.

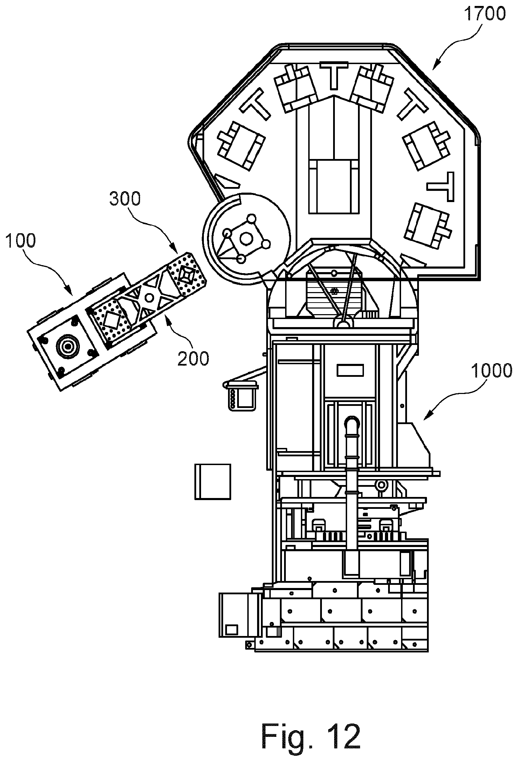

Fig. 12 zeigt schematisch die Transporteinrichtung 100 bei der Beladung eines Rundspeichers 1700 einer Werkzeugmaschine mit Paletten 300.

Hierdurch kann vorteilhaft gezeigt werden, dass eine mit einem Palettenwechsler 200 ausgerüstete Transporteinrichtung 100 eine Werkzeugmaschine 1000 nicht nur direkt (beispielsweise direkt den Arbeitsraum der Werkzeugmaschine 1000) beladen kann, sondern ebenfalls verschiedene Speicher (wie beispielsweise einen Rundspeicher 1700 der Werkzeugmaschine 1000) mit Paletten 300 beladen kann.

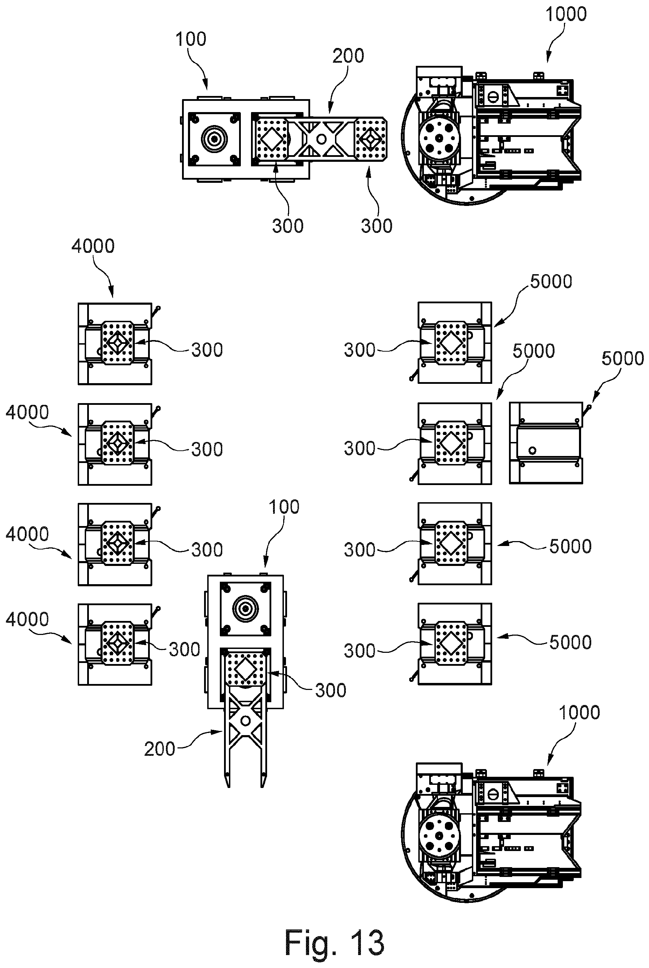

Fig. 13 zeigt schematisch eine beispielhafte Ausgestaltung eines Linearspeichers für Paletten-Handling mit mehreren Rüstplätzen 4000 und Ablageplätzen 5000, die von mehreren Transporteinrichtungen 100 mit entsprechenden Palettenwechslern 200 bedient und entsprechend mehrere Werkzeugmaschinen 1000 mit Paletten 300 beladen werden können. Hierbei können beispielsweise sowohl die Rüstplätze 4000 als auch die Ablageplätze 5000 als mehrstöckige Rüst- und Ablageplätze ausgestaltet sein.

Hierbei kann jede Transporteinrichtung 100 mit mehreren Paletten 300 beladen werden, wie dies beispielsweise durch einen entsprechenden Palettenwechsler 200 mit größerer Kapazität ermöglicht wird (wie beispielsweise in Figuren 5 bis 7 gezeigt) oder aber durch das Mitführen einer Palettenablage auf der Transporteinrichtung 100 (wie in Fig. 11 gezeigt). Weiterhin können aber auch mehrere Palettenwechsler 200 durch die jeweilige Transporteinrichtung 100 aufgenommen sein, um somit gleichzeitig mehrere Paletten 300 transportieren zu können.

Hierdurch kann beispielweise in vorteilhafter Weise erreicht werden, dass eine Vielzahl an Paletten 300 mit nur einer Transporteinrichtung 100 an beliebige Orte innerhalb der Produktionsstätte bzw. innerhalb des zu automatisierenden Bereiches gefahren werden kann. Hinzu kommt, dass die Transporteinrichtungen 100 ferner die Paletten 300 vor, neben oder hinter der jeweiligen Werkzeugmaschine 1000 ablegen und auch wieder holen können.

Insbesondere ermöglichen der flexible Einsatz und das hohe Maß an Automatisierung der Transporteinrichtungen 100 eine unbegrenzte Vielfalt, den Linearspeicher auszugestalten. Insbesondere bei der Verkettung von mehreren Werkzeugmaschinen 1000 verschiedenster Größen kann die Möglichkeit, das Layout des Linearspeichers frei zu gestalten, einen immensen Vorteil darstellen.

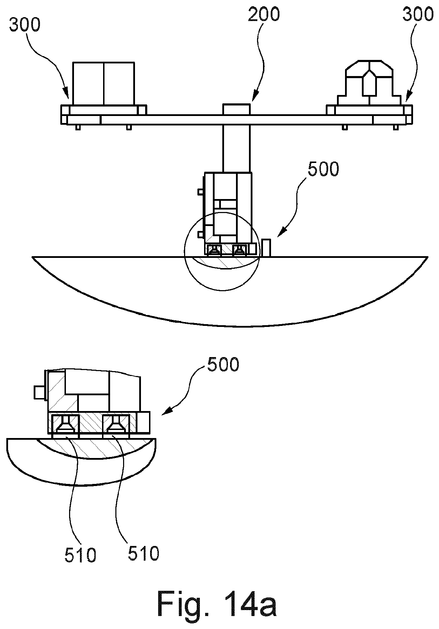

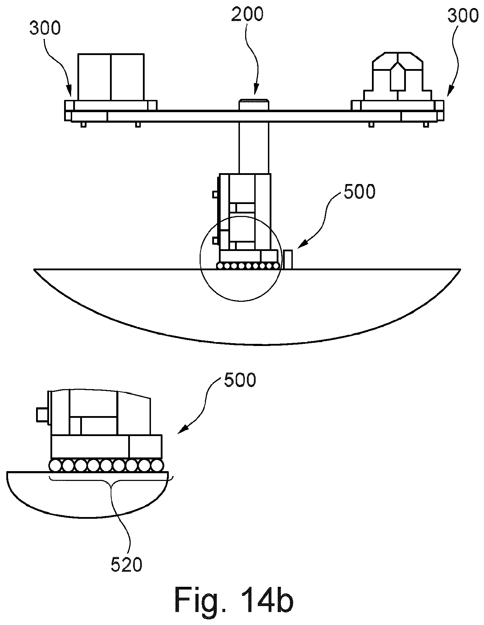

Figuren 14a und 14b zeigen schematisch eine Positionierung eines Palettenwechslers 200 an einem Ablageplatz 500 mittels konischer Aufnahmen 510 (Fig. 14a) und bei einem Ablageplatz 500 mit Rollentechnik 520 (Fig. 14b).

Dabei verfügen die Palettenwechsler 200 (wie an ihrem linken Rand angedeutet) über verschiedene Schnittstellen zur Kopplung des Palettenwechslers 200 an die Transporteinrichtung 100.

Die konischen Aufnahmen 510 können ferner den Palettenwechsler 200 zu allen Seiten positionieren, während bei dem Ablageplatz mit Rollentechnik 520 ein Tiefenanschlag vorgesehen werden muss, damit der Palettenwechsler 200 nicht von dem Ablageplatz 500 herunterfällt, wobei eine Positionierung des Palettenwechslers 200 in senkrechter Richtung zur Blattebene durch die Rollentechnik 520 nicht gewährleistet werden kann.

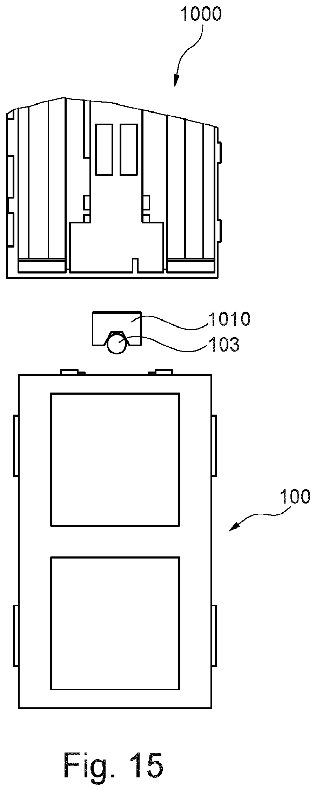

Fig. 15 zeigt schematisch eine Positionierung eines Teils der Transporteinrichtung 100 ohne angekoppelten Palettenwechsler 200 an einer Werkzeugmaschine 1000 mittels eines Prismas 1010.

Dabei verfügt die Transporteinrichtung 100 ferner über ein entsprechendes Gegenstück 103 (hier ein zylindrisches Gegenstück), um in das Prisma mit dem Gegenstück 103 einzufahren und so eine genaue Positionierung vor der Werkzeugmaschine 1000 zu erreichen. Es können jedoch auch mehrere Prismen 1010 und entsprechend mehrere Gegenstücke 103 für eine derartige Positionierung der Transporteinrichtung 100 vor der Werkzeugmaschine 1000 verwendet werden, sowohl in eine Richtung positionierend (z.B. in Längsrichtung der Transporteinrichtung 100) als auch in eine Richtung senkrecht dazu (z.B. Querrichtung der Transporteinrichtung 100).

Es sei an dieser Stelle darauf hingewiesen, dass die oben genannten Ausgestaltungsmöglichkeiten der Positionierung der Transporteinrichtung 100 nicht auf die Kombination Prisma 1010 und zylindrisches Gegenstück 103 beschränkt ist. Vielmehr könnte beispielsweise ein Teil mit einer V-förmigen Kerbe (als Alternative zum Prisma 1010) ebenfalls Verwendung finden.

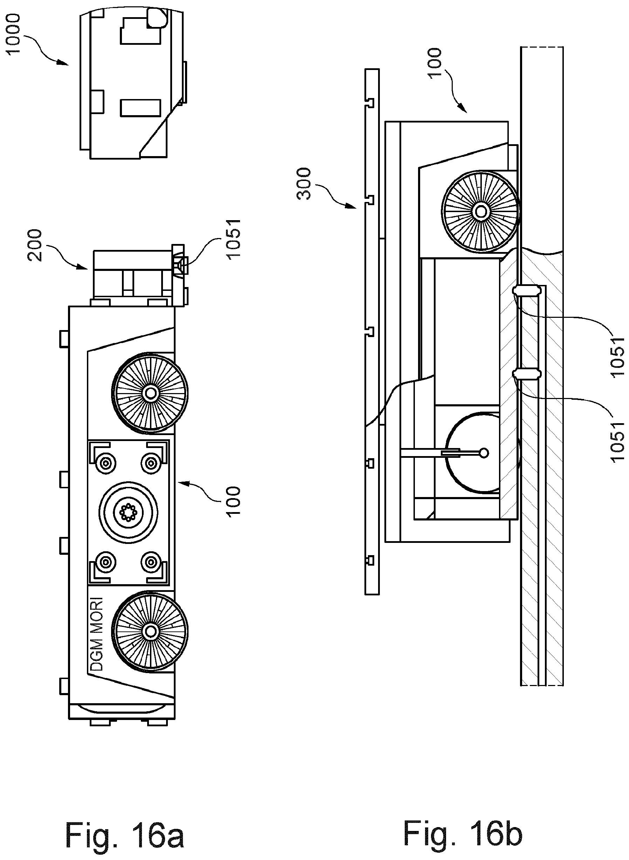

Fig. 16a zeigt schematisch eine Positionierung eines Teils der Transporteinrichtung 100 ohne angekoppelten Palettenwechsler 200 an einer Werkzeugmaschine 1000 mittels konischer Aufnahmen 1051.

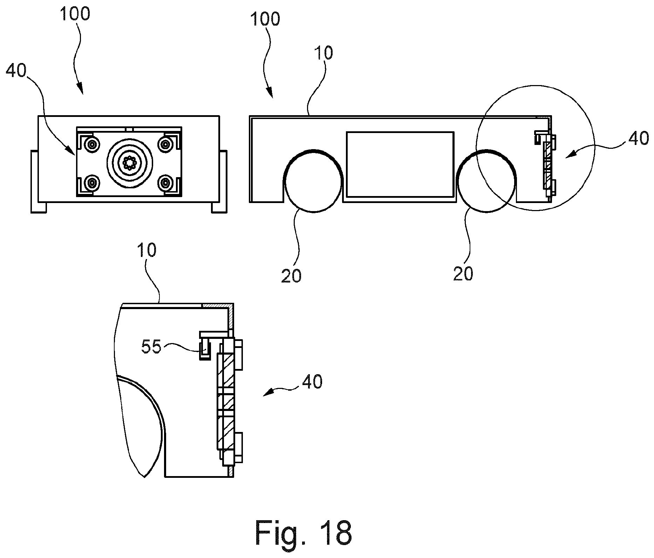

Dabei verfügt die Transporteinrichtung 100 über eine Höhenverstellung (hier nicht gezeigt, siehe dazu Figuren 17 und 18), die es ermöglichen, die Handhabungseinrichtung (hier beispielsweise einen Palettenwechsler 200) auf die konischen Aufnahmen 1051 der Werkzeugmaschine 1000 zu setzen und so eine sehr genaue Positionierung der Handhabungseinrichtung vor der Werkzeugmaschine 1000 zu erreichen.

Ferner ermöglichen die konischen Aufnahmen 1051 eine Lastaufnahme der Handhabungseinrichtung, welche insbesondere dann von entscheidendem Vorteil ist, wenn die Handhabungseinrichtung bei ihrer Verwendung große Massen zu tragen hat, welche eventuell die Lastaufnahmefähigkeit der Transporteinrichtung 100 übersteigen würde, zum Beispiel bei Paletten 300 mit besonders großen bzw. schweren Werkstücken 1 und der auftretenden Belastung beim Entnehmen der Palette 300 mit dem Werkstück 1.

Vorzugsweise verfügt die Transporteinrichtung 100 über eine definierte Position vor der Werkzeugmaschine 1000, bzw. den Ablageplätzen 500 / Rüstplätzen. Die Positionierung kann mechanisch, signaltechnisch oder kombiniert gewährleistet sein.

Diese Positionierung kann vorzugsweise über n mechanische Indexe via horizontal angeordnete Bewegung(en) (siehe Fig. 15) oder vertikaler Bewegung(en) ausgeführt werden. Alternativ können hierfür auch Drehbewegung(en) genutzt, die Bewegungen miteinander gekoppelt oder nacheinander ausgeführt werden.

In einer beispielhaften Ausführung wird die Positionierung durch eine vertikale Bewegung gewährleistet (siehe hierzu im Detail die Figuren 17 und 18).

Die Indexe können entweder mit den Werkzeugmaschinen 1000, den Ablageplätzen 500 und Rüstplätzen verbunden werden. Vorzugsweise werden die Indexe mit dem Hallenboden verbunden um keinerlei Störgrößen wie z. B. Schwingungen, Stöße auf die Werkzeugmaschine 1000 oder die Plätze zu bringen, während die Transporteinrichtung 100 positioniert wird.

Vorzugsweise werden die Indexe konenförmig ausgeführt (konische Aufnahmen 1051). Dadurch ist eine Positionierung in allen notwendigen Ebenen gewährleistet. Vorzugsweise sind die konischen Aufnahmen 1051 dabei so positioniert, dass sie nicht im eigentlichen Trittbereich vor der Werkzeugmaschine 1000 sind und damit den Bediener beim manuellen Arbeiten ergonomisch nicht behindern.

Vorzugsweise werden die konischen Aufnahmen 1051 dazu genutzt auch vertikal auftretende Lasten, die z. B. beim Palettenwechsel durch die zu entnehmende Palette 300 entstehen, aufzunehmen. Dadurch kann die Transporteinrichtung 100 auf die maximale Transportkapazität ausgelegt werden und muss keine durch Austauschvorgänge kurzfristig auftretenden Zusatzlasten aufnehmen.

Weiterhin können die konischen Aufnahmen 1051 dazu genutzt werden, eine Verbindung zwischen Werkzeugmaschine 1000, Plätzen und Transporteinrichtung 100 herzustellen. Diese Verbindung kann zur Signalübertragung oder zum Energieaustausch genutzt werden, falls dies nicht berührungslos gestaltet werden kann.

Weiterhin kann die o. g. Verbindung auch durch eine weitere Aufnahme realisiert werden, welche durch den Konenhub angedockt wird.

Zudem können die konischen Aufnahmen 1051 ver- und entriegelt werden um die Positionierung zusätzlich zu stabilisieren bzw. deren Genauigkeit zu erhöhen.

Die vertikalen Bewegungen der Transporteinrichtung 100 können durch Nutzung der auf der Transporteinrichtung 100 vorhandenen Medien angetrieben und angesteuert werden. Vorzugsweise kann jede der Aufnahmevorrichtungen 40 die Vertikalbewegung selbständig und unabhängig voneinander ausführen (siehe hierzu Fig. 18). Alternativ kann die Vertikalbewegung durch Anheben des Rahmens / Gestells des FTS relativ zu den Rädern erfolgen (siehe hierzu Fig. 17).

Die Hubbewegung kann frei alle notwendigen Positionen anfahren um einen geeigneten Ablauf zu finden. In einer beispielhaften Ausführung sind drei Hauptpositionen vorgesehen:
- Hub oben: Position in welcher die Transporteinrichtung 100 verfahren kann.
- Hub Mitte: Position in welcher die Handhabungseinrichtungen auf den Konen abgelegt sind.
- Hub unten: Ablegen von Handhabungseinrichtungen / Materialträgern / Boxen direkt auf dem Boden.

Weiterhin kann die Hubbewegung auch dazu genutzt werden, die Transporteinrichtung 100 auf einer Ladestation (hier nicht gezeigt) anzudocken und dort den Aufladevorgang zu ermöglichen.

Weiterhin kann die Handhabungseinrichtung durch die Transporteinrichtung 100 temporär direkt an die Werkzeugmaschine 1000 übergeben werden. Die Handhabungseinrichtung wird dabei über die in den konischen Aufnahmen 1051 integrierte Schnittstelle (siehe hierzu auch Fig. 16b) zur Herstellung einer Verbindung von der Werkzeugmaschine 1000 versorgt und die Transporteinrichtung 100 kann weitere Aufgaben und andere Handhabungseinrichtungen übernehmen. In diesem Fall dient die Transporteinrichtung 100 als Zubringer von temporären Handhabungseinrichtungen für verschiedene Werkzeugmaschinen 1000.

Fig. 16b zeigt schematisch einen Teil einer weitere Ausführungsform der Transporteinrichtung 100 ohne angekoppelten Palettenwechsler 200 bei einer Positionierung und Energie- und/oder Signalverbindungsschluss mittels konischer Aufnahmen 1051.

Dabei sind konische Aufnahmen 1051 der Werkzeugmaschine gezeigt, wobei diese, neben dem Positionieren der Transporteinrichtung 100, wenn diese sich mittels ihrer Hubzylinder (siehe hierfür Fig. 17) über den konischen Aufnahmen 1051 absenkt, eine Verbindung schließen können, über diese zum Beispiel Energie und/oder Signale zur Steuerung bzw. Überwachung der Transporteinrichtung 100 an die Transporteinrichtung 100 und umgekehrt von der Transporteinrichtung 100 an die Werkzeugmaschine 1000 übertragen werden können.

Durch die konischen Aufnahmen 1051 könnte beispielsweise, wie hier gezeigt, die Palette 300 oder aber eine beliebige Handhabungseinrichtung präzise an der Werkzeugmaschine 1000 positioniert werden und, und das ist im besonderen Maße vorteilhaft, eine Steuerung der Transporteinrichtung 100 bzw. der aufgenommenen Palette 300 erfolgen, ohne dabei einen internen Energiespeicher (hier nicht gezeigt) der Transporteinrichtung 100 zu belasten, da die Energie seitens der Werkzeugmaschine 1000 bereitgestellt und über die beschriebene Verbindung in die Transporteinrichtung 100 eingespeist wird.

Fig. 17a zeigt schematisch einen Teil einer Ausführungsform der Transporteinrichtung 100 ohne angekoppelten Palettenwechsler 200 mit einer Höhenverstellung der Transporteinrichtung 100 mittels Hubzylindern 50.

Dabei wird das Fahrgestell 10 durch die Hubzylinder 50 gegenüber den Rädern angehoben, so dass auch die aufgenommenen Handhabungseinrichtungen in ihrer Höhe relativ zu den Rädern 20 bzw. zu der Werkzeugmaschine 1000 (hier nicht gezeigt) verändert werden.

Fig. 17b zeigt schematisch einen Teil einer weitere Ausführungsform der Transporteinrichtung 100 ohne angekoppelten Palettenwechsler 200 mit einer Höhenverstellung der Transporteinrichtung mittels Hubzylindern 50.

Hierin soll eine Alternative gezeigt werden, bei der neben den Hubzylindern 50 ferner ein Fahrwerk 60 (z.B. auf Basis eines Hebelmechanismus) vorgesehen ist, um das Fahrgestell 10 der Transporteinrichtung gegenüber den Rädern 20 herauszuheben, so dass auch die mitgeführten Handhabungseinrichtungen in ihrer Höhe verändert werden.

Fig. 18 zeigt schematisch einen Teil einer Ausführungsform der Transporteinrichtung 100 ohne angekoppelten Palettenwechsler 200 mit einer Höhenverstellung der Aufnahmevorrichtung 40 zur Aufnahme von Handhabungseinrichtungen der Transporteinrichtung 100.

Hier wiederum wird nicht die Lage des Fahrgestells 10 gegenüber den Rädern 20 der Transporteinrichtung 100 verändert, sondern die Aufnahmevorrichtung 40 ändert ihre relative Lage gegenüber dem Fahrgestell 10 bzw. gegenüber des Plattformträgers.

Dies hat den Vorteil, dass die Hubzylinder 55 kleiner ausgestaltet sein können, da sie nicht noch das Gewicht des Fahrgestells 10 und der anderen aufgenommenen Handhabungseinrichtungen und weitere Zusatzgewichte tragen müssen.

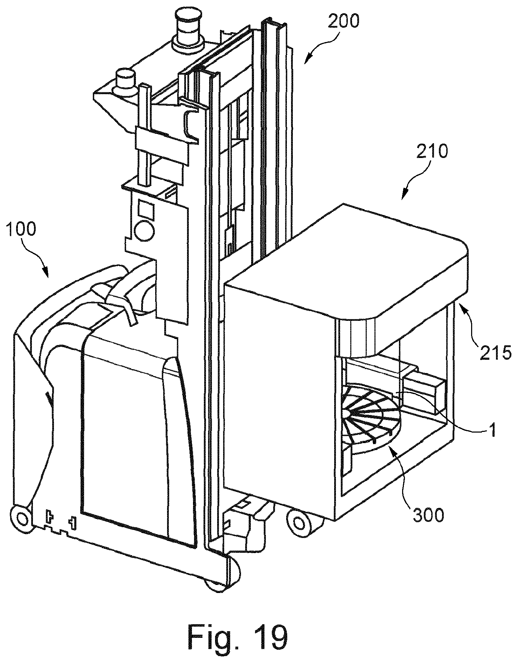

Fig. 19 zeigt schematisch eine weitere Ausführungsform der Transporteinrichtung 100 mit einem Palettenwechsler 200 und einer Haube 210 zum Schutz der transportierten Palette 300, vorzugsweise zum Schutz aller Seiten der Palette 300.

Dabei schützt die Haube 210 die transportierte Palette 300 vor äußeren Einwirkungen wie Schmutz, Luftströmungen oder aber auch gröberen mechanischen Einwirkungen etc. Umgekehrt schützt die Haube 210 aber ebenso die Umgebung vor eventuell von der Palette 300 herabfallenden Spänen oder abtropfendem Kühl-Schmierstoff, die beispielsweise nach einer erfolgten Bearbeitung eines Werkstücks 1 auf der Palette 300 noch an der Palette 300 anhaften könnten.

Hierfür kann zudem die Haube 210 an ihrer Öffnung, durch die die Palette 300 von dem Palettenwechsler 200 in die Haube 210 eingebracht wird, eine Verschließeinrichtung 215 aufweisen, um die Öffnung der Haube 210 zu verschließen.

Hierfür kann die Verschließeinrichtung 215 in der Form eines Rolltores, zumindest einer Falttür, zumindest einer Flügeltür, einer um eine horizontale Achse schwenkbare Klappe, oder einer Schiebetür ausgebildet sein. Die genannte Aufzählung soll jedoch nicht als abschließend verstanden werden und kann durch weitere Ausgestaltungsmöglichkeiten ergänzt werden.

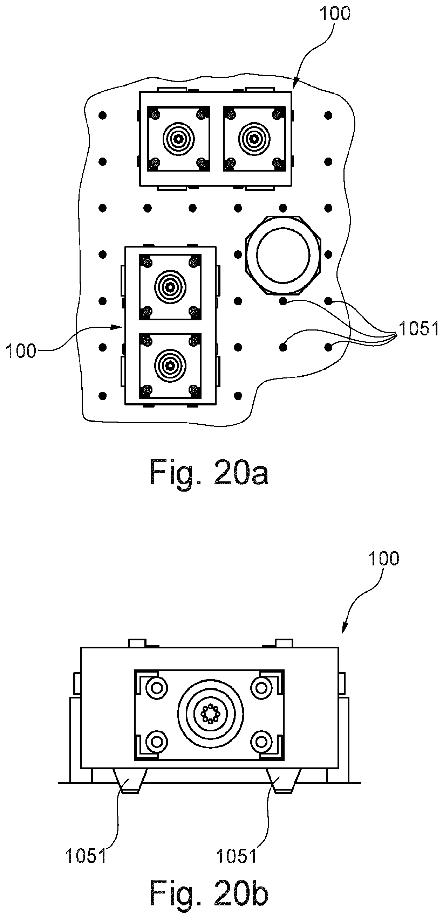

Fig. 20a zeigt schematisch einen Hallenboden mit rasterförmig angeordneten Konen 1051 zur Positionierung der Transporteinrichtungen 100, die hier nur teilweise und ohne angekoppelten Palettenwechsler 200 dargestellt ist.

Dabei können, wie bereits anhand von Fig. 16 erläutert, die Transporteinrichtung 100 abgesenkt werden, so dass entweder die Transporteinrichtung 100 selbst oder aber die von der Transporteinrichtung 100 aufgenommene Handhabungseinrichtung mittels der Konen 1051 positioniert wird.

Eine weitere Möglichkeit besteht darin, die Konen 1051 versenkbar auszugestalten, wenn beispielsweise die Konen 1051 für die Bewegungen der Transporteinrichtungen 100 auf dem Hallenboden störend sind. Hierfür müssten die Konen 1051 über eine eigene Hubvorrichtung (beispielsweise pneumatisch, hydraulisch, elektrisch oder mechanisch) verfügen, damit sie aus dem Hallenboden herausgehoben oder darin versenkt werden können. Zudem könnte ferner eine kombinierte Hubbewegung der Konen 1051 und der Transporteinrichtung 100 erfolgen, um die Positionierung durchzuführen.

Fig. 20b zeigt eine weitere Möglichkeit, die Konen 1051 an der Unterseite der Transporteinrichtung 100, die hier nur teilweise und ohne angekoppelten Palettenwechsler 200 dargestellt ist, vorzusehen und lediglich in dem Hallenboden entsprechende Vertiefungen für die Konen 1051 vorzusehen.

Hierdurch könnte nun die Hubbewegung durch die Transporteinrichtung 100 oder die Aufnahmevorrichtung 40 erfolgen, um die Positionierung durchzuführen. Ferner kann es aber auch möglich sein, dass die Konen 1051 am Unterboden der Transporteinrichtung 100 in die Vertiefungen des Hallenbodens abgesenkt werden, um eine Positionierung der Transporteinrichtung 100 bzw. der Handhabungseinrichtung zu ermöglichen.

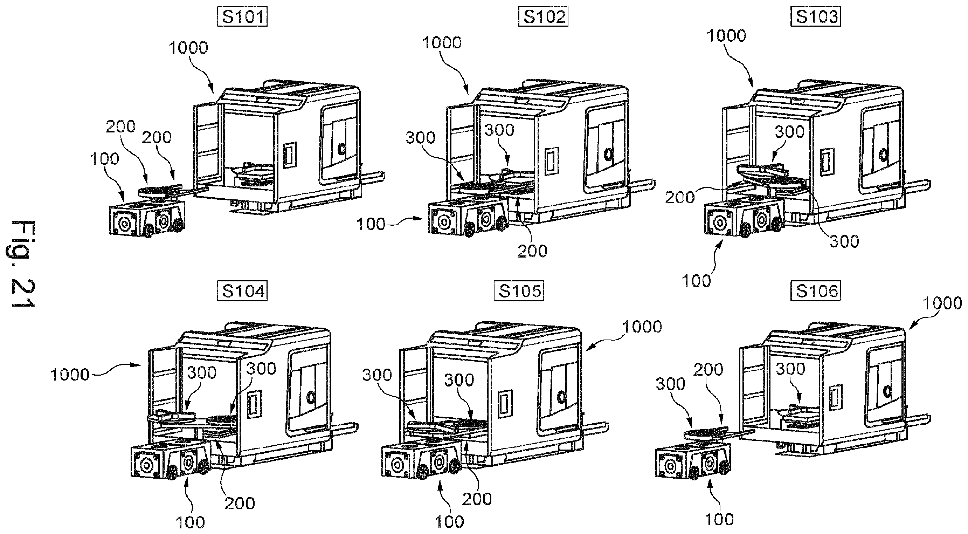

In diesen Fällen ist keine Störkontur mehr auf dem Hallenboden vorhanden, so dass die Transporteinrichtungen 100 uneingeschränkt über den Hallenboden fahren könnten. Zudem kann bei der Ausführungsform, wie in Fig. 21b gezeigt, auf eine zusätzliche Hubvorrichtung (beispielsweise für die Konen am Hallenboden) verzichtet werden.

Fig. 21 zeigt schematisch das Verfahren zur Handhabung einer Palette 300 und/oder eines Werkstücks an einer Werkzeugmaschine 1000 mittels eines Palettenwechslers 200.

Zu Beginn muss die Transporteinrichtung 100 einen Palettenwechsler 200 aufnehmen, welcher bevorzugt bereits eine Palette 300, die in die Werkzeugmaschine 1000 eingelegt werden soll, trägt.

Beim Aufnehmen des Palettenwechslers 200 (Handhabungseinrichtung) kann eine Verbindung zwischen der Transporteinrichtung 100 und dem Palettenwechsler 200 über Anschlusselemente der Transporteinrichtung 100 hergestellt werden, über die Steuerungssignale und/oder Energie von der Transporteinrichtung 100 zum Palettenwechsler 200 übertragen werden.

Auf diesen Schritt soll in der bildlichen Darstellung jedoch verzichtet werden, da bereits in den vorherigen Ausführungsformen mehrfach die Aufnahme einer Handhabungseinrichtung (wie einen Palettenwechsler 200) und das Herstellen der Verbindung für Energie- und/oder Signalübertragung beschrieben wurde.

Wie im Schritt S101 gezeigt ist, nähert sich die Transporteinrichtung 100 mit dem aufgenommenen Palettenwechsler 200 und der Palette 300 der Werkzeugmaschine 1000, welche selbst bereits eine Palette 300 in ihrem Arbeitsraum aufweist.

Im darauffolgenden Schritt S102 wird der Palettenwechsler 200 vor der Werkzeugmaschine 1000 positioniert. Dies kann, wie bereits beschrieben, in der Art erfolgen, dass entweder die Transporteinrichtung 100 selbst die Positionierung mittels Fahrbewegungen vornimmt, oder aber die Transporteinrichtung 100 durch Absenken ihres Fahrgestells 10 auf konische Aufnahmen 1051 (hier nicht gezeigt) gegenüber der Werkzeugmaschine 1000 positioniert wird, oder aber die Transporteinrichtung 100 den Palettenwechsler 200 auf konische Aufnahmen 1051 absetzt.

Hierdurch können nun entweder Energie und/oder Signale (z.B. zur Steuerung des Palettenwechsels) von der Transporteinrichtung 100 auf den Palettenwechsler 200 übertragen werden, oder aber durch das Absetzen des Palettenwechslers 200 auf die konischen Aufnahmen 1051 der Werkzeugmaschine 1000 der Palettenwechsler 200 mit der Werkzeugmaschine 1000 direkt verbunden werden, so dass Signale und/oder Energie von der Werkzeugmaschine 1000 direkt an den abgesetzten Palettenwechsler 200 übertragen werden.

Weiterhin ist gezeigt, dass der Palettenwechsler 200 bereits die bisher in der Werkzeugmaschine 1000 eingelegte Palette 300 aufgenommen hat.

Im Schritte S103 wird nun die in der Werkzeugmaschine 1000 befindliche Palette 300 durch den Palettenwechsler 200 herausgehoben und eine Drehung des Palettenwechslers eingeleitet, so dass die von dem Palettenwechsler 200 getragene Palette 300 sich der Palettenaufnahme der Werkzeugmaschine 1000 nähert, wie dies auch ferner im Schritt S104 gezeigt ist.

Im darauffolgenden Schritt S105 wird die von dem Palettenwechsler 200 bisher getragene Palette 300 über der Palettenaufnahme der Werkzeugmaschine 1000 durch Drehung des Palettenwechslers 200 positioniert und auf die Palettenaufnahme der Werkzeugmaschine 1000 abgesetzt.

Im Anschluss daran erfolgt wieder das Hochheben des Palettenwechslers 200 von den konischen Aufnahmen 1051 und ein Entfernen / Wegfahren der Transporteinrichtung 100 mit Palettenwechsler 200 und der aus der Werkzeugmaschine 1000 entnommenen Palette 300, wie dies im Schritt S106 gezeigt ist.

Ferner kann das Verfahren aber auch derart ablaufen, dass nach dem Absetzen des Palettenwechslers 200 an der Werkzeugmaschine 1000 die Transporteinrichtung 100 ohne den Palettenwechsler weiterfährt, um z.B. in der Zwischenzeit eine andere Handhabungseinrichtung (einen anderen Palettenwechsler 200 oder dergleichen) aufzunehmen und diesen entsprechend des Auftrages einer Werkzeugmaschine 1000 oder einem Ablageplatz 500 (hier nicht gezeigt) zu bringen.

Im Anschluss daran kann die Transporteinrichtung 100 oder eine andere Transporteinrichtung 100 den vor der Werkzeugmaschine 1000 abgesetzten Palettenwechsler 200 nach erfolgtem Wechsel der Palette wiederaufnehmen und entsprechend weiter verfahren.

Die vorstehend genannten Verfahrensschritte können dabei aber auch um die jeweiligen, funktionstypischen Schritte der einzelnen Module und Vorrichtungen, die durch die Transporteinrichtung 100 aufgenommen werden, ergänzt werden
Vorstehend wurden Beispiele bzw. Ausführungsbeispiele der vorliegenden Erfindung sowie deren Vorteile detailliert unter Bezugnahme auf die beigefügten Figuren beschrieben.

Es sei erneut hervorgehoben, dass die vorliegende Erfindung jedoch in keinster Weise auf die vorstehend beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele bzw. durch Kombination einzelner oder mehrerer der Merkmale der beschriebenen Beispiele im Rahmen des Schutzumfanges der unabhängigen Ansprüche umfasst sind.

Insbesondere sei an dieser Stelle darauf hingewiesen, dass die verschiedensten Ausgestaltungen und Funktionen, die die Transporteinrichtung 100 erfüllen kann, miteinander kombiniert werden können, um ein überaus flexibles Maschinenkonzept bereitzustellen, um das Bearbeiten von Werkstücken 1 noch flexibler und effizienter zu gestalten.

Es können aber auch bereits bestehende Werkzeugmaschinen 1000 einfach um das Werkstück- und Paletten-Handling ergänzt werden.

Die oben genannten Möglichkeiten sind daher nicht als einschränkend aufzufassen und können ausdrücklich in beliebiger Weise miteinander kombiniert werden.

### LISTE DER BEZUGSZEICHEN

- **1**: Bauteil / Werkstück
- **10**: Fahrgestell / Plattform
- **20**: Rad
- **30**: Energiespeicher
- **35**: interne Steuerung
- **40**: Aufnahmevorrichtung
- **41**: konenförmige Abschnitte der Aufnahmevorrichtung
- **42**: Schnittstelle der Aufnahmevorrichtung
- **43**: Befestigungsmittel und Anschlüsse
- **44**: Vertiefung
- **45**: Druckstück
- **46**: Zentriervorrichtung
- **47**: Antrieb zum Verfahren der Vertiefungen
- **48**: Bolzen
- **50**: Hubzylinder (für Rad bzw. Fahrwerk)
- **55**: Hubzylinder (für Aufnahmevorrichtung)
- **60**: Fahrwerk
- **70**: Stecker
- **71**: Druckstück des Steckers
- **72**: Steckerfixierung
- **73**: mechanischer Anschlag
- **74**: Anschlussschnittstelle
- **75**: Steckerkörper
- **100**: Transporteinrichtung
- **103**: Gegenstück (zum Prisma)
- **200**: Palettenwechsler
- **210**: Haube
- **215**: Verschließeinrichtung
- **300**: Palette
- **350**: Palettenhalter
- **351**: Ausrichtelement des Palettenhalters
- **500**: Ablageplatz
- **510**: konische Aufnahme (bei Ablageplatz)
- **520**: Ablageplatz mit Rollentechnik
- **1000**: Werkzeugmaschine
- **1010**: Prisma
- **1051**: konische Aufnahme
- **1700**: Rundspeicher
- **4000**: Rüstplatz für Palette
- **5000**: Ablageplatz für Palette

## Patentansprüche

1. System, umfassend:
- zumindest eine Transporteinrichtung (100), und
- eine zentrale Steuereinrichtung (2000),
wobei die zumindest eine Transporteinrichtung (100) umfasst:
ein fahrerloses Transportfahrzeug zum Transportieren einer oder mehrerer Handhabungseinrichtungen, die jeweils zur Handhabung einer Palette (300) und/oder eines Werkstücks (1) an einer zur spanenden Bearbeitung des Werkstücks (1) eingerichteten, auf einer Grundfläche aufgestellten Werkzeugmaschine (1000) eingerichtet sind,
wobei das fahrerlose Transportfahrzeug zum Positionieren der einen oder mehreren Handhabungseinrichtungen relativ zu der Werkzeugmaschine (1000) auf der Grundfläche verfahrbar ist, insbesondere innerhalb eines Bereiches vor und/oder neben der Werkzeugmaschine (1000) und/oder vor und/oder neben einem Arbeitsraum der Werkzeugmaschine (1000),
wobei das fahrerlose Transportfahrzeug dazu eingerichtet ist, unabhängig von einer Art Schienensystem oder dergleichen zur Führung des Transportfahrzeugs frei auf einer Ebene verfahren zu werden,
wobei die Transporteinrichtung (100) eingerichtet ist, mit der zentralen Steuereinrichtung (2000) zu kommunizieren und durch diese steuerbar ist, und
wobei die Transporteinrichtung als Handhabungseinrichtung einen an das fahrerlose Transportfahrzeug über eine Aufnahmevorrichtung (40) angekoppelten Palettenwechsler (200) umfasst, wobei die Aufnahmevorrichtung (40) ferner Anschlusselemente (70) aufweist, die für eine Übertragung von Steuerungssignalen und Energie an den Palettenwechsler (200) eingerichtet sind,
wobei der Palettenwechsler (200) dazu eingerichtet ist, Paletten (300) zur Aufnahme eines Werkstücks (1) in den Arbeitsraum und an einem Rüstplatz (4000) der Werkzeugmaschine (1000) ein- und auszuwechseln, nachdem das fahrerlose Transportfahrzeug mit dem angekoppelten Palettenwechsler (200) verfahren und innerhalb eines Bereiches vor und/oder neben dem Arbeitsraum der Werkzeugmaschine (1000) positioniert wurde,
wobei der Palettenwechsler (200) über die Anschlusselemente (70) durch die zentrale Steuereinrichtung (2000) steuerbar ist,
und wobei die zentrale Steuereinrichtung (2000) eingerichtet ist, den Palettenwechsler (200) der zumindest einen Transporteinrichtung (100) zu steuern.

2. System nach Anspruch 1, **dadurch gekennzeichnet, dass**
die Aufnahmevorrichtungen (40) eine Zentriervorrichtung (46) aufweist, die dazu eingerichtet ist, die jeweils aufgenommenen Handhabungseinrichtung gegenüber der Aufnahmevorrichtung (40) auszurichten.

3. System gemäß Anspruch 2, **dadurch gekennzeichnet, dass**
die Aufnahmevorrichtungen (40), die eine Zentriervorrichtung (46) aufweist, ferner einen Antrieb (47) zur linearen Verschiebung der Aufnahmevorrichtung (40) in Richtung der Zentriervorrichtung (46) aufweist.

4. System gemäß einem der Ansprüche Anspruch 1 bis 3, **dadurch gekennzeichnet, dass**
die Anschlusselemente (70) bei der Aufnahme der Handhabungseinrichtung eine Verbindung mit der Handhabungseinrichtung zur Übertragung von elektrischen, pneumatischen und/oder hydraulischen Steuerungssignalen und/oder Energie automatisch herstellen.

5. System gemäß Anspruch 4, **dadurch gekennzeichnet, dass**
die Aufnahmevorrichtung (40) eine Kontrollvorrichtung zum Überwachen des Zustands der Aufnahme der jeweiligen Handhabungseinrichtung aufweist, wobei die Kontrollvorrichtung insbesondere dazu eingerichtet ist, die Steuerungssignale, die Energieübertragung, und/oder einen Arretierzustand der an der Aufnahmevorrichtung (40) aufgenommenen Handhabungseinrichtung zu überwachen.

6. System gemäß einem der vorstehenden Ansprüche, **gekennzeichnet durch**:
- einen Antrieb zum Verfahren des Transportfahrzeugs, und
- eine Steuereinheit zum Steuern der Transporteinrichtung (100).

7. System gemäß einem der vorstehenden Ansprüche, **dadurch gekennzeichnet, dass**
der Palettenwechsler (200) zur Aufnahme der Palette (300) einen Greifer, eine Aufnahmeklaue und/oder eine gabelförmige Aufnahme aufweist.

## Claims

1. A system, comprising:
- at least one transport device (100), and
- a central control device (2000),
wherein the at least one transport device (100) comprises:
a driverless transport vehicle for transporting one or more handling devices, each of which is configured to handle a pallet (300) and/or a workpiece (1) on a machine tool (1000) configured for machining the workpiece (1) and set up on a base surface,
wherein the driverless transport vehicle is movable on the base surface for positioning the one or more handling devices relative to the machine tool (1000), in particular within an area in front of and/or next to the machine tool (1000) and/or in front of and/or next to a working space of the machine tool (1000),
wherein the driverless transport vehicle is configured to be moved freely on a plane independently of a type of rail system or the like for guiding the transport vehicle,
wherein the transport device (100) is configured to communicate with the central control device (2000) and is controllable by it, and
wherein the transport device comprises as a handling device a pallet changer (200) coupled to the driverless transport vehicle via a receiving device (40), wherein the receiving device (40) further comprises connection elements (70) configured for transmitting control signals and energy to the pallet changer (200),
wherein the pallet changer (200) is configured to insert and replace pallets (300) for receiving a workpiece (1) in the working space and at a setup location (4000) of the machine tool (1000) after the driverless transport vehicle with the coupled pallet changer (200) has been moved and positioned within an area in front of and/or next to the working space of the machine tool (1000),
wherein the pallet changer (200) is controllable by the central control device (2000) via the connection elements (70),
and wherein the central control device (2000) is configured to control the pallet changer (200) of the at least one transport device (100).

2. The system according to claim 1, **characterized in that**
the receiving devices (40) comprise a centering device (46) configured to align the respectively received handling device with respect to the receiving device (40).

3. The system according to claim 2, **characterized in that**
the receiving devices (40) comprising a centering device (46) further comprise a drive (47) for linearly displacing the receiving device (40) in the direction of the centering device (46).

4. The system according to any one of claims 1 to 3, **characterized in that**
when the handling device is received, the connection elements (70) automatically establish a connection to the handling device for transmitting electrical, pneumatic and/or hydraulic control signals and/or energy.

5. The system according to claim 4, **characterized in that**
the receiving device (40) comprises a monitoring device for monitoring the state of the reception of the respective handling device, wherein the monitoring device is in particular configured to monitor the control signals, the energy transmission, and/or a locking state of the handling device received at the receiving device (40).

6. The system according to any one of the preceding claims, **characterized by**:
- a drive for moving the transport vehicle, and
- a control unit for controlling the transport device (100).

7. The system according to any one of the preceding claims, **characterized in that**
the pallet changer (200) comprises a gripper, a receiving claw and/or a forkshaped receptacle for receiving the pallet (300).

## Revendications

1. Système comprenant :
- au moins un dispositif de transport (100), et
- un dispositif de commande central (2000),
dans lequel l'au moins un dispositif de transport (100) comprend :
un véhicule de transport sans conducteur pour le transport d'un ou de plusieurs dispositifs de manipulation qui sont respectivement conçus pour la manipulation d'une palette (300) et/ou d'une pièce à usiner (1) sur une machine-outil (1000) conçue pour l'usinage par enlèvement de copeaux de la pièce à usiner (1) et posée sur une surface de base,
dans lequel le véhicule de transport sans conducteur peut être déplacé sur la surface de base pour le positionnement des un ou plusieurs dispositifs de manipulation par rapport à la machine-outil (1000), en particulier à l'intérieur d'une zone devant et/ou à côté de la machine-outil (1000) et/ou devant et/ou à côté d'un espace de travail de la machine-outil (1000),
dans lequel le véhicule de transport sans conducteur est conçu pour être déplacé librement sur un plan indépendamment d'un type de système de rails ou similaire pour le guidage du véhicule de transport,
dans lequel le dispositif de transport (100) est conçu pour communiquer avec le dispositif de commande central (2000) et peut être commandé par celui-ci, et
dans lequel le dispositif de transport comprend en tant que dispositif de manipulation un changeur de palette (200) couplé au véhicule de transport sans conducteur par l'intermédiaire d'un dispositif de réception (40), dans lequel le dispositif de réception (40) présente en outre des éléments de raccordement (70) qui sont conçus pour une transmission de signaux de commande et d'énergie au changeur de palette (200),
dans lequel le changeur de palette (200) est conçu pour introduire et remplacer des palettes (300) pour la réception d'une pièce à usiner (1) dans l'espace de travail et à un emplacement de préparation (4000) de la machine-outil (1000) après que le véhicule de transport sans conducteur avec le changeur de palette (200) couplé a été déplacé et positionné à l'intérieur d'une zone devant et/ou à côté de l'espace de travail de la machine-outil (1000),
dans lequel le changeur de palette (200) peut être commandé par le dispositif de commande central (2000) par l'intermédiaire des éléments de raccordement (70),
et dans lequel le dispositif de commande central (2000) est conçu pour commander le changeur de palette (200) de l'au moins un dispositif de transport (100).

2. Système selon la revendication 1, **caractérisé en ce que**
les dispositifs de réception (40) présentent un dispositif de centrage (46) qui est conçu pour orienter le dispositif de manipulation respectivement reçu par rapport au dispositif de réception (40).

3. Système selon la revendication 2, **caractérisé en ce que**
les dispositifs de réception (40), qui présentent un dispositif de centrage (46), présentent en outre un entraînement (47) pour le déplacement linéaire du dispositif de réception (40) en direction du dispositif de centrage (46).

4. Système selon l'une quelconque des revendications 1 à 3, **caractérisé en ce que**
les éléments de raccordement (70) établissent automatiquement, lors de la réception du dispositif de manipulation, une liaison avec le dispositif de manipulation pour la transmission de signaux de commande électriques, pneumatiques et/ou hydrauliques et/ou d'énergie.

5. Système selon la revendication 4, **caractérisé en ce que**
le dispositif de réception (40) présente un dispositif de contrôle pour surveiller l'état de la réception du dispositif de manipulation respectif, dans lequel le dispositif de contrôle est en particulier conçu pour surveiller les signaux de commande, la transmission d'énergie et/ou un état d'arrêt du dispositif de manipulation reçu sur le dispositif de réception (40).

6. Système selon l'une quelconque des revendications précédentes, **caractérisé par** :
- un entraînement pour déplacer le véhicule de transport, et
- une unité de commande pour commander le dispositif de transport (100).

7. Système selon l'une quelconque des revendications précédentes, **caractérisé en ce que**
le changeur de palette (200) présente un préhenseur, une griffe de réception et/ou un réceptacle en forme de fourche pour recevoir la palette (300).
